# EUROPEAN PATENT APPLICATION

(11) **EP 4 173 488 A1**
(43) Date of publication of application: **03.05.2023**
(21) Application number: 21382976.5
(22) Date of filing: 29.10.2021
(51) Int. Cl.: A22C 17/14, A22C 17/16

(54) **CASING COMPRISING SEVERAL LAYERS OF GASTROINTESTINAL TRACTS AND METHOD FOR ITS MANUFACTURING**

(71) Applicant: United Caro Research and Development, S.L.U., 18800 Granada (ES)
(72) Inventor: Caro Salmeron, Antonio, 18800 Baza (ES)
(74) Representative: Isern Patentes y Marcas S.L.

(57) **Abstract**

The invention relates to a casing that comprises at least 1 layer derived from a gastrointestinal (GI) tract section, wherein the % in volume of at least one animal tissue of interest with respect to the volume of all the tissues present in the casing is lower than 10%. It also relates to a method for obtaining said casing, to the use of said casing for obtaining a sausage, and to a method for obtaining said sausage.

## Description

### FIELD OF THE INVENTION

The present invention is addressed to casings obtained from one or several gastrointestinal sections (stomach, small intestine and/or large intestinal) isolated from an animal that can be used for the preparation of sausages, and are especially characterized by the absence of strong and unpleasant odors usually present in this type of products.

### BACKGROUND OF THE INVENTION

Sausage casing, also known as sausage skin or simply casing, is the material that encloses the filling of a sausage. Natural casings are made from animal intestines or skin. The process begins at the slaughter plant where "green" (uncleaned) runners (ungraded casings) are removed from the animal during the slaughter process and they are subsequently cleaned, which involves breaking the inner mucosa (usually with a machine that goes through and rollers that break the inner mucosa so it can be flushed out and removed). The cleaning process can also be done by hand but casings are primarily machine cleaned. This is a very water intensive process as the casings are vigorously flushed with cold water to remove blood from the mucosa which if not properly flushed during the initial processing can lead to "staining" of the casing where it becomes pink. The cleaned runners are then tied in bundles and packed in plastic drums and filled with a saturated salt brine for preservation. The runners are then sold to the company which processes natural casings by grading and packaging them to create finished units called hanks.

Depending on the final product to be obtained, casing made of layers from different origins are used (pig, cattle, sheep...). Standards and shapes of natural casings are not uniform, as they depend on the shape of the GI tract from which they derive. They are also susceptible to insects when processed and stored, showing a vague and easy to change taste. This is partly why, casings made of Gi tract sections from different origins are used (pig, cattle, sheep...), depending on the final product to be obtained (hot dog, salami etc). To ensure a uniform shape and improve the sanitary conditions of the casings, artificial layers have been produced, primarily made of cellulose, collagen, plastic, or collaphen. However, said casings are in some cases non-edible, or in others, such as those made of collagen, not completely resistant to high temperatures. Therefore, there is a need in the art of methods that allow obtaining casings with a higher size and shape versatility, good sanitary and organoleptic conditions, and that are well-adapted to produce a high range of final products.

### BRIEF DESCRIPTION OF THE DRAWINGS

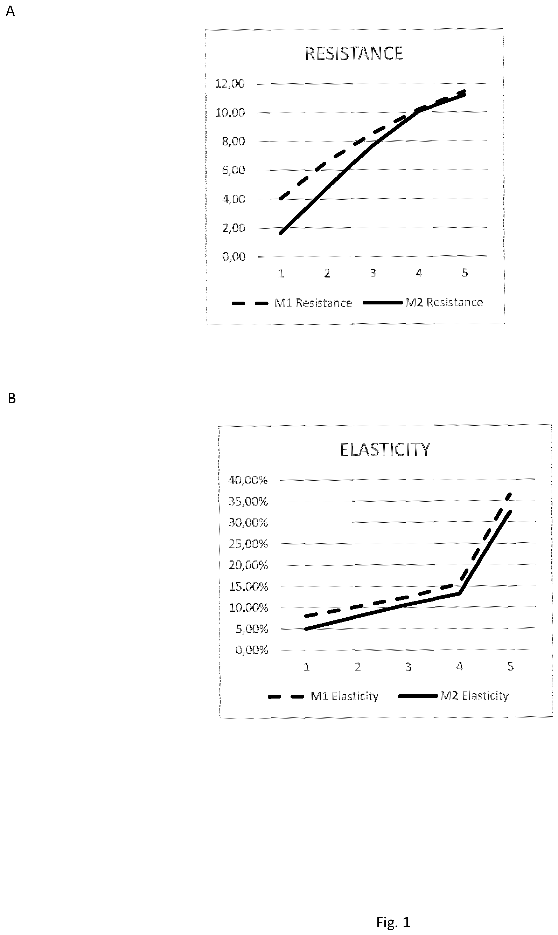

Figure 1 shows the resistance and elasticity of two casing samples M1 and M2 (that comprise several intestinal layers, i.e. multi-intestinal casings) analyzed in example 2, table 4 below. The values shown in Fig. 1 correspond to those depicted in example 2, table 4. A- Resistance of samples M1 and M2 in response to an increasing force applied. The (y) axis represents the resistance of the sample (N/cm) in response to an increasing force applied and the (x) axis represents successive times (1-5) at which resistance is measured before the casing breaks in response to the force applied. The measuring time represented with the number 5 corresponds to that at which the casing breaks in response to the force applied. B- Elasticity of samples M1 and M2 in response to an increasing force applied. The (y) axis represents the elasticity of the sample (%) in response to an increasing force applied and the (x) axis represents successive times (1-5) at which elasticity is measured before the casing breaks in response to the force applied. The measuring time represented with the number 5 corresponds to that at which the casing breaks in response to the force applied.

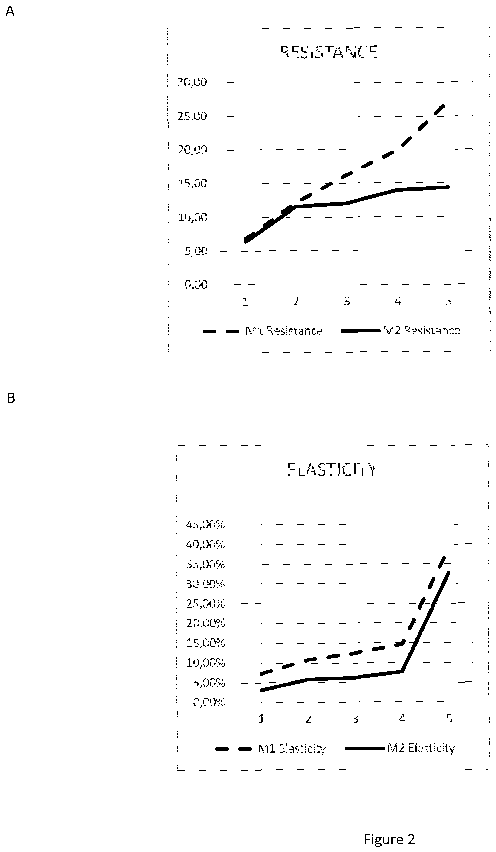

Figure 2 shows the resistance and elasticity of two casing samples M1 and M2 (that comprise several intestinal layers, i.e. multi-intestinal casings), analyzed in example 2, table 6 below. The values shown in Fig. 2 correspond to those depicted in example 2, table 6. A- Resistance of samples M1 and M2 in response to an increasing force applied. The (y) axis represents the resistance of the sample (N/cm) in response to an increasing force applied and the (x) axis represents successive times (1-5) at which resistance is measured before the casing breaks in response to the force applied. The measuring time represented with the number 5 corresponds to that at which the casing breaks in response to the forces applied in response to the force applied. B- Elasticity of samples M1 and M2 in response to an increasing force applied. The (y) axis represents the elasticity of the sample (%) in response to an increasing force applied and the (x) axis represents successive times (1-5) at which elasticity is measured before the casing breaks in response to the force applied. The measuring time represented with the number 5 corresponds to that at which the casing breaks in response to the forces applied.
Figure 3 shows different stuffed multi-intestinal casings before they are cured. A- Stuffed casings M1-M4 (from left to right) analyzed in example 5 below. B- Stuffed casings M1-M5 (from left to right) analyzed in example 6 below.

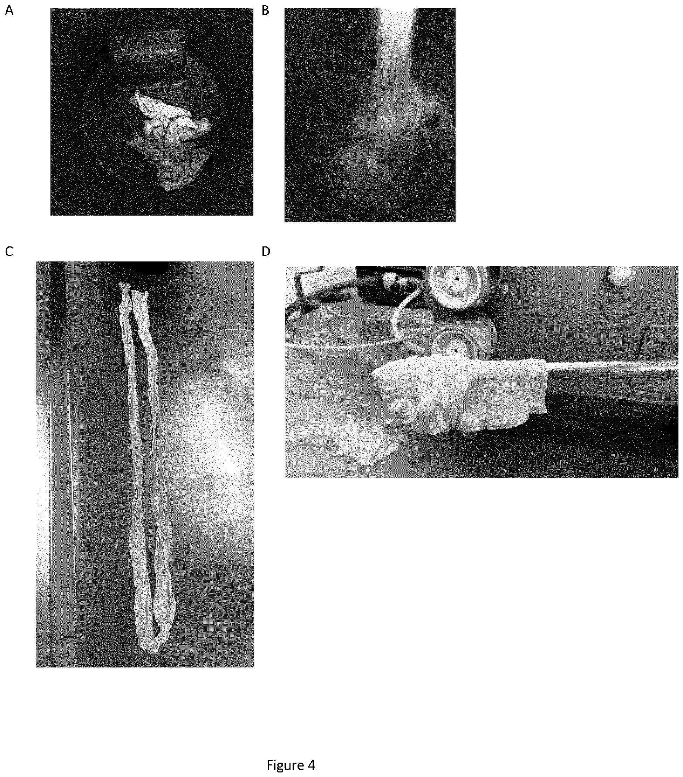

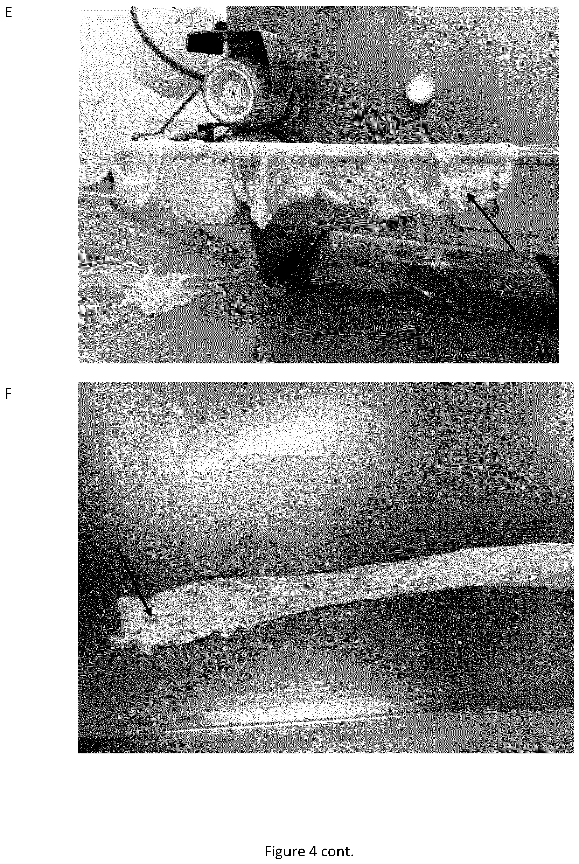

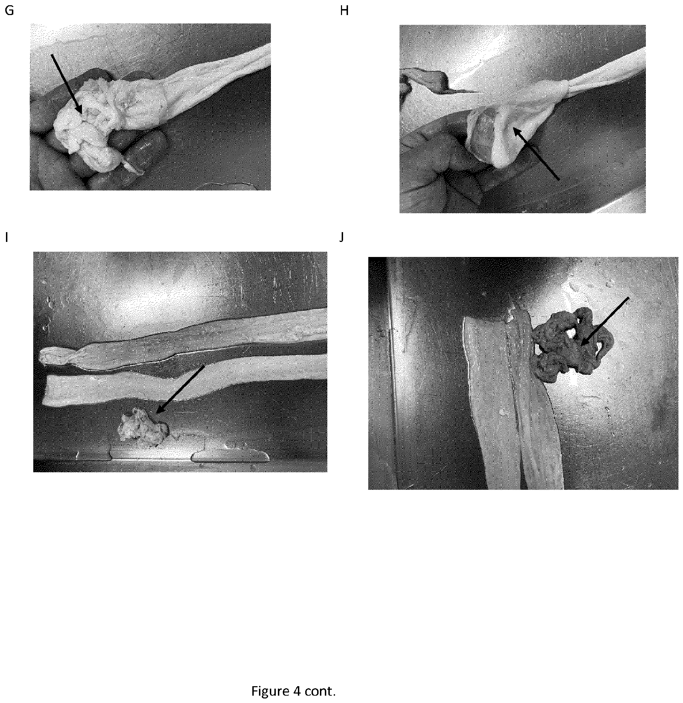

Figure 4 shows a thick-casing before and after removing the tissue of interest; A- Thick-casing put in a bucket where it will be desalted; B- Thick-casing plus hot water; C- Clean thick-casing extended on a workbench; D- Thick-casing prepared to be turned inside out; E- Turned thick-casing, where the tissue of interest, (in this case superficial adipose tissue) that is to be removed is shown and highlighted with an arrow; F- Thick-casing comprising the tissue of interest (in this case superficial adipose tissue) is extended on the table. The tissue of interest to be removed is highlighted with an arrow; G- Thick-casing comprising the tissue of interest (in this case superficial adipose tissue). The tissue of interest to be removed is highlighted with an arrow; H- Clean thick-casing without the tissue of interest (in this case superficial adipose tissue). The thick-casing section on which the tissue of interest has not yet been removed is pointed out with an arrow. I- comparison between a clean thick-casing without the tissue of interest (in this case superficial adipose tissue) and a thick-casing with said tissue of interest. The tissue of interest to be removed is highlighted with an arrow. J- Two clean thick-casings and the tissue of interest (in this case superficial adipose tissue) that has been removed next to it, which is highlighted with an arrow.

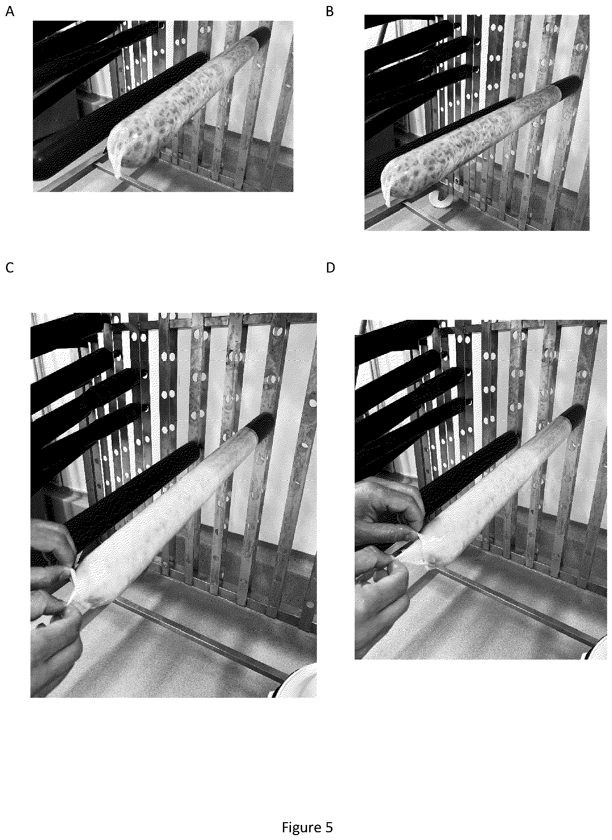

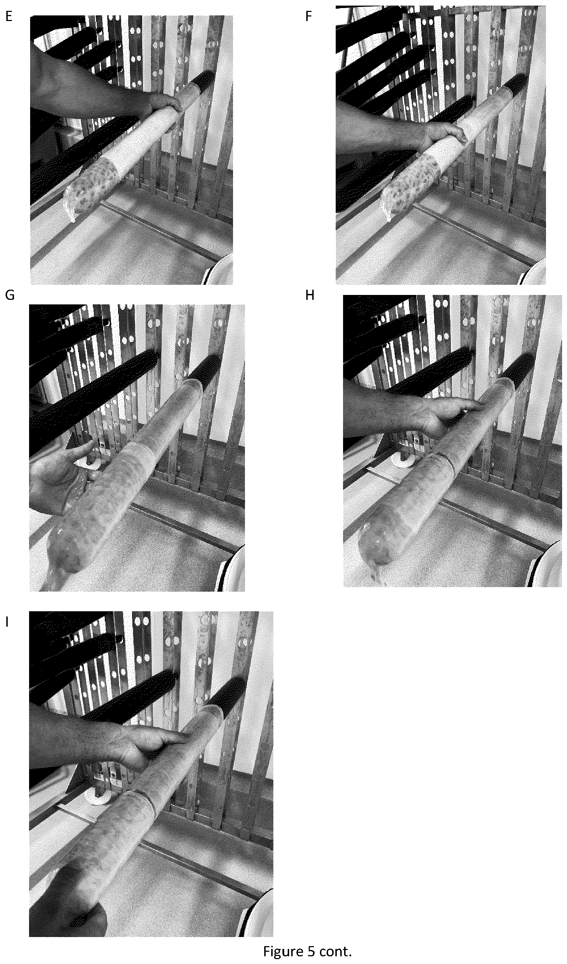

Figure 5 shows gut layers deposited on a mold. A-B- Gut put in a mold (1 layer); C-F Gut put in a mold with several layers; G- Gut placed in the mold with several layers and a join in the center; H-I- Gut put in a mold with several layers.

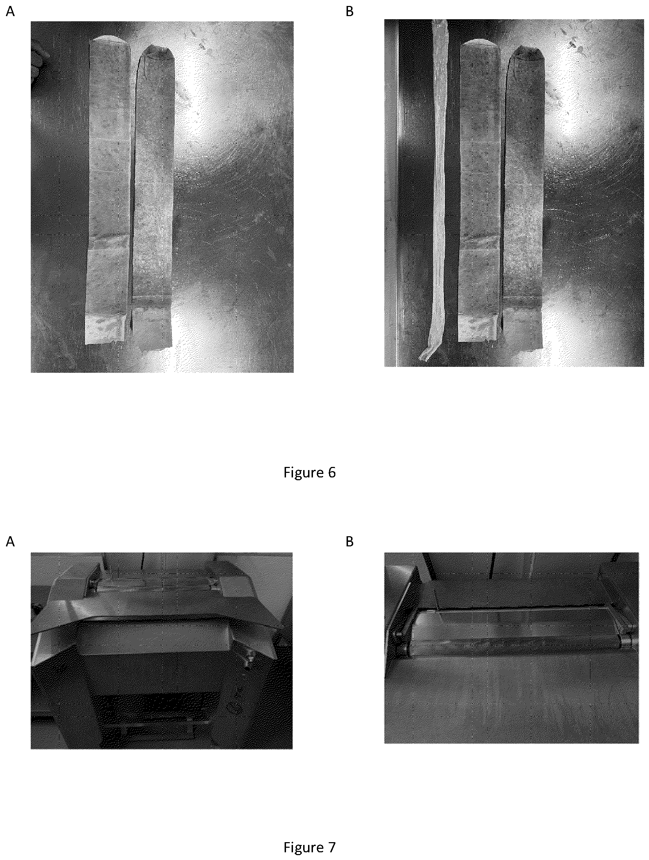

Figure 6shows natural multi-intestinal casing unmolded. A- Natural multi-intestinal casing unmolded; B- Visual comparison of a fresh casing and multi-intestinal casing already removed from the mold.
Figure 7 shows a scraper machine used for removing the tissue of interest.

### SUMMARY OF THE INVENITON

The inventors have developed a method to generate a casing that comprises several layers isolated from gastrointestinal (GI) tract sections, including, if necessary, sections isolated from the large intestine. Said GI tract sections do not need to be limited to be obtained from a specific animal species. Upon inclusion of a step of mechanically detaching at least one tissue of interest performed on the mucosa and/or on the serosa of the GI tract section, wherein said at least one tissue of interest comprises at least the epithelium of the mucosa or the mesentery attached to the serosa, respectively, the inventors have observed that the organoleptic properties of the casing are considerably improved. In addition, this step of mechanically removing tissues of interest allows using GI wall sections isolated not only from the small intestine, but also from any GI tract region, such as the large intestine of almost any animal species (including sheep, pig or cattle), which comprise a high amount of tissues that alter the organoleptic properties of the product, and/or that can be the cause of bacterial or viral infections. Thus, the method allows to improve the organoleptic properties of the casings and/or of the final product, and also their sanitary conditions, and/or increase their conservation time. ,.

In addition, the curing or drying process of food products provided within casings that comprise one or several layers derived from GI tract regions from the large intestine, tend to take longer than those introduced in casings that comprise layers from GI regions from the small intestine instead. Therefore, providing casings with layers derived from GI tracts from the large intestine alone, or in combination with layers from other GI regions, can lengthen the currying or drying process of the food products introduced in said casings. Longer drying or curing times can improve the maturation process of the food products shifted inside the casing, and thus lead to final products with better organoleptic properties, and/or of a higher quality. Thus, the method developed by the inventors, which allows using one or several layers from different GI tract regions and animal species in one casing, allows to more increase the combinations of characteristics of the casing, and ultimately, to have a higher range of casings each one adapted to different curing levels or types. Thus, the method allows to improve the curing process of the food product shifted inside the casing, and thus the quality of the final product. This method also allows to obtain a higher range of shapes and sizes of casings (as layers with much different sizes and shapes can be used), and thus, to also better control the final shape and size of the casings.

In addition to the above-mentioned advantages of the method of the invention, and associated to the casing obtained, the following productive, sensory and organoleptic advantages of the casing obtained can be highlighted:
- Homogeneous caliber,
- Homogeneous currying,
- Homogeneous fat composition throughout the piece,
- Absence of characteristic unpleasant flavors and odors,
- It is not necessary to desalt it for its use, it is only necessary to hydrate it,
- Packaging convenient and easy to store and transport.

Therefore, in a first aspect, the invention relates to a casing that comprises at least 1 layer derived from a GI tract wall section, wherein the % in w/w of at least one animal tissue of interest with respect to the weight of all the tissues present in the casing is lower than 30%.

In a second aspect, the invention relates to a method for obtaining the casing according to the first aspect of the invention that comprises the following steps:
(i) detaching from at least one GI tract wall section, part or all of the at least one tissue of interest, and
(ii) depositing around the surface of a mold in a sequential manner, several layers derived from GI tract sections, wherein at least one of said layers derives from a GI tract section treated with step (i).

In a third aspect, the invention relates to a casing obtained by the method according to the second aspect of the invention.

In a fourth aspect, the invention relates to the use of the casing according the first or to the third aspect of the invention, for obtaining a sausage.

In a fifth aspect, the invention relates to a sausage comprising the casing according to the first or third aspect of the invention.

In a sixth aspect, the invention relates to a method for obtaining a sausage that comprises introducing in the casing according to the first or third aspect of the invention, an eatable dough.

### DETAILED DESCRIPTION OF THE INVENTION

### I- Casing of the invention

In a first aspect, the invention relates to a casing that comprises at least 1 layer derived from a GI tract wall section, wherein the % in volume of at least one animal tissue of interest with respect to the volume of all the tissues present in the casing is lower than 10%.

In a particular embodiment, the at least one tissue of interest comprises a tissue selected from the list consisting of the mesentery, the mesenteric adipose tissue, adipose tissue, the muscularis propia, the epithelium from the mucosa, the lamina propia from the mucosa, the muscular mucosa, the submucosa and combinations thereof. In a particular embodiment, the at least one tissue of interest comprises the mesentery, the mesenteric adipose tissue, the muscularis propia, the epithelium from the mucosa, the lamina propia from the mucosa, muscular mucosae or combinations thereof. In a particular embodiment, the tissue of interest is any tissue of the GI tract, except the submucosa. In another embodiment, the at least one tissue of interest comprises adipose tissue. In another embodiment, the at least one tissue of interest comprises mesenteric tissue. In another embodiment, the at least one tissue of interest comprises mesenteric adipose tissue. In another embodiment, the at least one tissue of interest comprises muscularis propia. In another embodiment, the at least one tissue of interest, comprises the epithelium of the mucosa. In another embodiment, the at least one tissue of interest comprises adipose tissue and epithelium from the mucosa. In another embodiment, the at least one tissue of interest comprises mesenteric tissue, preferably mesenteric adipose tissue, and epithelium from the mucosa. In a preferred embodiment, the at least one tissue of interest that comprises epithelium from the mucosa also comprises lamina propia tissue, preferably connective tissue from the lamina propia. In a preferred embodiment, the at least one tissue of interest that comprises epithelium from the mucosa also comprises lamina propia tissue, preferably connective tissue from the lamina propia, and muscularis mucosae. In a preferred embodiment, the at least one tissue of interest comprises or consists of mesenteric tissue, preferably adipose mesenteric tissue, muscularis propia, epithelium from the mucosa, tissue from the lamina propia, preferably comprising connective tissue from the lamina propia, and muscularis mucosae.

The term "casing", as used herein, refers to a coat made of a specific material that takes the form of a container and thus comprises an exterior layer made of said specific material and an interior cavity. The interior cavity can be filled with a continent, so that said continent is separated from the environment by the specific material that makes the casing. However, ss well understood by a skilled person, the casing refers to the coat in the form of a container, and does not necessarily comprise a continent. In an embodiment, the casing comprises in its interior cavity a continent. In another embodiment, the casing is not filled with any continent in its interior cavity, preferably, the casing is empty in its interior cavity. In another embodiment, the casing comprises a medium in its interior cavity, but said medium is not the continent to be filled within the interior cavity of the casing, hence it is not the continent to be separated from the environment by the casing. In a particular embodiment, said medium is water. In a preferred embodiment, the specific material that makes the casing, i.e. the coat that takes the form of a container as referred herein, derives from walls of the gastrointestinal (GI) tract of an animal.

The expression "gastrointestinal tract", or "GI tract", as used herein, refers to the tract from the mouth to the anus which includes all the organs of the digestive system of an animal i.e. to the series of hollow organs joined in a long, twisting tube from the mouth to the anus. The hollow organs that make up the GI tract are the mouth, esophagus, stomach, small intestine, large intestine, and anus. As used herein, the term "gut" refers to a part of the GI tract, preferably to the intestinal part, or the intestine (including the small, large intestine, parts thereof, and combination thereof). Thus, in a particular embodiment, the term "gut" refers to a GI tract section. The primary functions of GI tract include digestion and absorption of nutrients, secretions, and immune response. The unique architecture of the GI tract facilitates these functions, including multiple levels of unfolding that result in an immense surface area, thus allowing maximal nutrient absorption. The wall of the intestine is conventionally described in terms of its component tissue layers, and these tissue layers are not separated entirely from one another but are joined together by connective tissue and by the neural and vascular elements. All segments of the GI tract are divided into four tissue layers, known as tunics: the mucosa (epithelium, lamina propria, and muscular mucosae), the submucosa, the muscularis propria (inner circular muscle layer, intermuscular space, and outer longitudinal muscle layer), and the serosa. The mucosa is the innermost layer, which is structurally and functionally the most complex and important area. The mucosa consists of three tissue layers. The first tissue layer facing the intestinal lumen is made up of epithelial cells, which is a single layer in the GI tract and is attached to a basement membrane overlying the second layer, the lamina propria, which consists of subepithelial connective tissue and lymph nodes. The lamina propria of the small intestines have lymphatic vessels called lacteals that transport absorbed lipids to the circulation. The connective tissue of the lamina propria is proper. The cells of the lamina propria are variable and can include fibroblasts, lymphocytes, plasma cells, macrophages, eosinophilic leukocytes, and mast cells. It provides support and nutrition to the epithelium, as well as the means to bind to the underlying tissue. Underneath the lamina propia is the third and deepest tissue layer called muscularis mucosae. This is a continuous sheet of smooth muscle cells that lies at the base of the lamina propria. The entire mucosa rests on the submucosa, which consists of a proper connective tissue comprising a variety of inflammatory cells, lymphatics, autonomic nerve fibers, and ganglion cells. Beneath the submucosa is the muscularis propria. The outermost tissue layer is named as the serosa or, if it lacks an outer tissue layer of mesothelial cells, the adventitia. This area is also a branching and distribution zone for arteries and small venous channels (Rao JN, Wang JY. "Regulation of gastrointestinal mucosal growth", Morgan & Claypool Life Sciences; 2010). The GI tract of the intestines is attached to the posterior abdominal wall by the mesentery. The term "mesentery", as defined herein, is a double fold of peritoneal tissue that suspends the small intestine and large intestine from the posterior abdominal wall. It was previously thought to be a collection of discrete structures - each with separate insertions into the posterior wall. However, it has recently been found to be one contiguous structure. However, subsections of the mesentery can be named according to the viscera it is associated with. Thus, names such as mesocolon, mesorectum, mesosigmoid all relate to different parts of the mesentery. The mesentery provides a conduit for blood vessels, nerves and lymphatic vessels, and helps storing fat. The microscopic structure of the mesocolon and associated fascia is consistent from ileocecal to mesorectal levels. A surface mesothelium and underlying connective tissue is universally apparent. Adipocytes lobules within the body of the mesocolon are separated by fibrous septae arising from submesothelial connective tissue. Where apposed to the retroperitoneum, two mesothelial layers separate the mesocolon and underlying retroperitoneum. Between these is Toldt's fascia, a discrete layer of connective tissue. Lymphatic channels are evident in mesocolic connective tissue and in Toldt's fascia. As well known by an expert in the field, the mesentery comprises mesenteric adipose tissue (MAT). The MAT consists of peri-intestinal compartment of visceral adipose tissue (VAT) (Eder P. et al., Cells. 2019, 8(6): 628). In a particular embodiment, the term "GI tract", as used herein, refers to the tract as defined above, once isolated from an animal body, or that has been isolated from an animal body, most preferably from a dead animal body. It can include rests of mesenteric tissue, as defined above, preferably mesenteric adipose tissue, attached to the serosa, adventitia or external wall of the GI tract. In a particular embodiment, the GI tract as referred herein, comprises mesenteric tissue, preferably mesenteric adipose tissue, attached to the serosa, adventitia or external wall of the GI tract. In addition, the GI tract as referred herein does not include the digestive sub-products comprised within it when inside the organism from which it derives, such as feces or food in a particular step of the digestive process. However, it may contain some rests of it, such as fat attached to the mucosa of the GI tract derived from the digestive sub-products. In a preferred embodiment, the GI tract, as used herein, refers solely to the tissues and anatomical structures that form the wall of the GI tract of an organism and optionally tissue anatomically attached to it, wherein said tissue is preferably mesenteric tissue, more preferably mesenteric adipose tissue.

The term "connective tissue", as used herein, refers to the tissue that connects, separates and supports all other types of tissues in the body. Connective tissue is found in between other tissues everywhere in the body. The cells of connective tissue include fibroblasts, adipocytes, macrophages, mast cells and leucocytes. Connective tissue can be broadly classified into connective tissue proper and special connective tissue. Connective tissue proper consists of loose connective tissue and dense connective tissue, which are distinguished by the ratio of ground substance (gelatinous substance primarily made of proteins, glycosaminoglycans-GAGs- collagen and elastic fibers...) to fibrous tissue. Loose connective tissue has much more ground substance and a relative lack of fibrous tissue, while the reverse is true of dense connective tissue. Special connective tissue consists of reticular connective tissue, adipose tissue, cartilage, bone, and blood.

As well understood by a skilled person, the term "wall", as used herein, refers to the tunica and anatomical structures that conform the GI tract, as defined above.

The term "GI tract section" or "GI tract wall section", as used herein, refers to a piece of the GI tract of an organism or to the whole GI tract of an organism as just defined. Preferably, it refers to a piece of the GI tract of an organism. Said piece has been obtained for instance upon one or two cuts of said GI tract. In a preferred embodiment, said piece or section comprises all the components of the GI tract from which is has been obtained as defined above.

Preferably, said section conserves the tubular shape of the GI tract from which it derives, i.e. conserves the shape of a tube, or the shape of the hollow organs that constitute said GI tract section. As well understood by a skilled person, to obtain said section while conserving the tubular shape of the GI tract from which it derives, the GI tract has simply been cut in one site (to form one of the ends of the section) or two sites (to form each one, one of the two ends of the section) in a transversal direction. In a particular embodiment, said section conserving the tubular shape of the GI tract from which it derives comprise no cuts in a longitudinal direction.

In another embodiment, the section has been additionally cut in a longitudinal direction, and thus the GI tract does not conserve the "tubular" shape as referred above, but has acquired a shape comparable to that of a sheet, or to a piece thereof. In a particular embodiment, the measure of the widths of said sheet are the measures of the diameters of the GI tract at the sites where the corresponding transversal cuts where performed, and the measure of the length is the measure of the length of the longitudinal cut. In another particular embodiment, the corresponding sheet has been further cut, and/or the GI tract section is a piece of a sheet as just defined. In a particular embodiment, the GI tract section is a piece of a sheet as just defined and has an irregular shape.

In an embodiment, the length of the GI tract section referred herein is of 5 cm, 10 cm, 12 cm, 15 cm, 20 cm, 25 cm, 30 cm, 35 cm, 40 cm, 45 cm, 50 cm, 60 cm, 75 cm, 80 cm, 90 cm, 100 cm, 110 cm, 120 cm, 130 cm, 140 cm, 150 cm, 160 cm, 170 cm, 180 cm, 190 cm, 200 cm, 250 cm, 270 cm, 300 cm, 350 cm, 400 cm, 450 cm, 500 cm, 550 cm, 600 cm, 650 cm, 700 cm, 750 cm, 800 cm, 850 cm, 900 cm, 950 cm, 1000 cm. In a particular embodiment, the length of the GI tract section referred herein is of 50 cm. In another particular embodiment, the length of the GI tract section referred herein is of 100 cm. In another embodiment, the length of the GI tract section referred herein is of 200 cm.

In another embodiment, the length of the GI tract section is of between 15-200 cm, 20-150 cm, 50-100cm, preferably 50-100cm.

In a particular embodiment, the GI tract section comprises the annal channel of the large intestine and has length of 300 cm, 350 cm, 400 cm, 450 cm, 500 cm, 550 cm, 600 cm, 650 cm, 700 cm, 750 cm, 800 cm, 850 cm, 900 cm, 950 cm, 1000 cm. In a particular embodiment, the GI tract section referred herein comprises the annal channel of the large intestine and has length of 500 cm. In another embodiment, the GI tract section referred herein comprises the annal channel of the large intestine and has a length of 600 cm.

In another embodiment, the GI tract section comprises the annal channel of the large intestine and has a length of between 300-1000 cm, 400-800 cm, 500-600 cm, preferably of between 500-600 cm. In a particular embodiment, the GI tract section comprises the annal channel of the large intestine and has length of between length of between 800-1000 cm.

In an embodiment, the GI tract sections are isolated from any part of the GI tract, preferably from a part of the large intestine, the small intestine, the stomach or combinations thereof. In a particular embodiment, the GI tract section referred herein is isolated from a part of at least two organs forming the GI tract, preferably from a part of the large intestine and of the small intestine. The expression "part of" as used herein, refers to any section of the corresponding organ, including 100% of the length of the corresponding organ or less than 99% of said length. In a particular embodiment, it refers to 100%, 99%, 97%, 95%, 90%, 85%, 80%, 75%, 70%, 65%, 60%, 55%, 50%, 45%, 40%, 35%, 30%, 25%, 20%, 17%, 15%, 12%, 10%, 7%, 5%, 3%, 2%, 1%, 0.5% of the length of the corresponding organ. In another embodiment, the expression refers to less than 99% of the length of the corresponding organ.

The expression "GI tract section isolated from" or "GI tract wall section isolated from", as used herein, refers to the GI tract section, as defined above, that has been cut or extracted from a GI tract, itself isolated from a particular organism. The distance between the two cuts or between the cut and the end of the GI tract used, corresponds to the length of the GI tract section as defined in the embodiment above. In a preferred embodiment, the "GI tract section isolated from" or "GI tract wall section isolated from" one or several organs refers to a "GI tract section that comprises a part of" said one or several organs wherein the expression "part of" refers to part of said organ refers to 100% of the length of the corresponding organ or less than 99% of said length. In another particular embodiment, the "GI tract section isolated from" or "GI tract wall section isolated from" a specific organ refers to a "GI tract section that comprises" all of said organ. Methods to isolate a GI tract section from one, 2 or three consecutive GI organs are well-known by an expert in the field and include surgical cuts of the GI tract that form the edges of the GI tract sections. In some embodiments, said cuts are those that inevitably occur when isolating the intestines and/or stomach from an organism, most preferably from a dead organism, and that are aimed at cutting the mesentery to isolate said organs. Alternatively, the cuts on the GI tract can be performed to obtain GI tract sections of the size of interest, or of a part of the GI tract of interest.

Thus, in a particular embodiment, the GI tract section of the invention comprises at least a part of an organ of the GI tract, preferably selected from the small intestine, the large intestine, the stomach or combinations thereof. In a preferred embodiment, the GI tract section/s referred in step (i) and/or step (ii) of the method is/are isolated from a part of the large intestine, the small intestine, the stomach or combinations thereof. In an embodiment, the GI tract section comprises a part of the small intestine. In another embodiment, the GI tract section comprises a part of the large intestine. In another embodiment, the GI tract section comprises a part of the stomach. In a particular embodiment, the GI tract section comprises a part of the large intestine and a part of the small intestine. In another particular embodiment, the GI tract section comprises a part of the large intestine, a part of the small intestine and a part of the stomach. In another embodiment, the GI tract section comprises a part of the stomach and of the small intestine.

The term "large intestine", as used herein, refers to the tube-like organ that is connected to the small intestine at one end and the anus at the other. The large intestine has four parts: cecum, colon, rectum, and anal channel. In a particular embodiment, the GI tract section isolated from a part the large intestine, comprises the cecum, the transverse colon, the descending colon, the sigmoid colon, the rectum, the anal channel, parts thereof or combinations thereof. In a preferred embodiment, large intestine part from which the GI tract section is isolated consists of the cecum, the transverse colon, the descending colon, the sigmoid colon, the rectum, the anal channel, parts thereof or combinations thereof.

The term "small intestine", as used herein, refers to the long tube-like organ that connects the stomach and the large intestine. The small intestine has three parts: the duodenum, jejunum, and ileum. In a particular embodiment, the GI tract section isolated from the small intestine, comprises the duodenum, jejunum, ileum, parts thereof or combinations thereof. In a preferred embodiment, the small intestine part from which the GI tract section is isolated consists of the duodenum, the jejunum, the ileum, parts thereof or combinations thereof.

The term "stomach", as used herein, refers to a saclike expansion of the digestive tract of a vertebrate that is located between the esophagus and duodenum and typically consists of a simple often curved sac with an outer serous covering, a strong muscular wall that contracts rhythmically, and an inner mucous membrane lining that contains gastric glands.

The term "layer", or "layer derived from GI tract wall sections", as used herein in the context of the elements forming the casing of the invention, refers to the GI tract section, as defined herein, that has been treated to eliminate undesired rest materials, such as rests of fats, of mucus or of blood adhered to the mucosa that has been isolated from an organism, most preferably from a dead organism. Therefore, the layers forming the casing, as used herein, refers to a GI tract section that lacks any of the above-mentioned components. Thus, as well understood by a skilled person, the term layer as used herein refers to a tissue that derives from a tissue that has already been isolated from an animal organism, most preferably from a dead animal organism. In a particular embodiment, the term layer refers to the GI tract section directly deposited in the mold in the method of the invention, described in the second aspect of the invention. Thus, in a particular embodiment, the term layer refers to a GI tract section directly provided from the slaughter. In another particular embodiment, when the GI tract section comprises at least one tissue of interest as defined herein, said at least one tissue of interest is also removed to obtain the layer as defined herein. The resulting % in volume or of surface of said tissue of interest present in the layer as compared to the volume or surface of the rest of tissues comprised in the layer is any of those defined in the embodiments bellow. Methods to determine the % in volume or surface of a tissue of interest present in a specific layer are well known by an expert in the field and correspond to those provided below for determining the % in volume or surface of an animal tissue of interest in the casing, applied to the corresponding layer instead of to the casing.

In another embodiment, the eliminated component from the GI tract section is the fat derived from the digestive products attached to the mucosa of the GI tract section when comprised inside the organism from which it is isolated. In a preferred embodiment, the amount of fat derived from the digestive products attached to the mucosa eliminated is all the fat (i.e. 100% in weight %) of that comprised in the GI tract section when comprised inside the organism from which it is isolated. In a particular embodiment, the eliminated component from the GI tract section is part of the fat derived from the digestive products attached to the mucosa and comprised in the GI tract section when comprised inside the organism from which it is isolated, wherein part of the fat preferably refers to a % in weight of at least 50%, 60%, 70%, 80%, 85%, 90%, 91%, 92%, 93%, 94%, 95%, 96%, 97%, 98%, 99%, 99.5%, 99.8%, 99.9% a compared to the weight of fat present in the GI tract section when comprised inside the organism from which it is isolated. In another embodiment, the eliminated component from the GI tract section is the mucus comprised in the GI tract section when comprised inside the organism from which it is isolated. In a preferred embodiment, the amount of mucus eliminated is all the mucus (i.e. 100% in weight %) of the mucus comprised in the GI tract section when comprised inside the organism from which it is isolated. In a particular embodiment, the eliminated component from the GI tract section is part of the mucus comprised in the GI tract section when comprised inside the organism from which it is isolated, wherein part of the mucus preferably refers to a % in weight of at least 50%, 60%, 70%, 80%, 85%, 90%, 91%, 92%, 93%, 94%, 95%, 96%, 97%, 98%, 99%, 99.5%, 99.8%, 99.9% a compared to the weight of mucus present in the GI tract section when comprised inside the organism from which it is isolated. In another embodiment, the eliminated component from the GI tract section is the blood comprised in the GI tract section when comprised inside the organism from which it is isolated. In a preferred embodiment, the amount of blood eliminated is all the blood (i.e. 100% in a weight %) comprised in the GI tract section when comprised inside the organism from which it is isolated. In another embodiment, the eliminated component from the GI tract section is part of the blood comprised in the GI tract section when comprised inside the organism from which it is isolated, wherein part of the blood preferably refers to a percentage in weight at least 50%, 60%, 70%, 80%, 85%, 90%, 91%, 92%, 93%, 94%, 95%, 96%, 97%, 98%, 99%, 99.5%, 99.8%, 99.9% as compared to the weight of blood present in the GI tract section when comprised inside the organism from which it is isolated. In another embodiment, the eliminated component from the GI tract section is the mucosa present in the GI tract section when comprised inside the organism from which it is isolated. In a preferred embodiment, the amount of mucosa eliminated is all the mucosa (i.e. 100% in a weight %) comprised in the GI tract section when comprised inside the organism from which it is isolated. In another embodiment, the eliminated component from the GI tract section is part of the mucosa comprised in the GI tract section when comprised inside the organism from which it is isolated, wherein part of the mucosa preferably refers to a percentage in weight at least 50%, 60%, 70%, 80%, 85%, 90%, 91%, 92%, 93%, 94%, 95%, 96%, 97%, 98%, 99%, 99.5%, 99.8%, 99.9% as compared to the weight of mucosa present in the GI tract section when comprised inside the organism from which it is isolated

In a preferred embodiment, the components eliminated from the GI tract section is a combination of any of the above-mentioned components referred to have been eliminated from the GI tract section treated. In a preferred embodiment, the components eliminated are the fat, mucus, blood, the mucosa, and combinations thereof as defined in the embodiments above. In a particular embodiment, all the fat, mucus, blood, the mucosa, and combinations thereof comprised in the GI tract section when comprised inside the organism from which it is isolated.

As well understood by a skilled person, eliminating part or all of the mucosa of the GI tract section allows eliminating the fat, mucus and/or blood referred above.

In a particular embodiment, when the tissue of interest eliminated from the at least one layer of the casing comprises the epithelium of the mucosa, the fat, mucus and/or blood adhered to the said epithelium is also eliminated.

As well understood by a skilled person, the layer as defined herein forming the casing, lacks the components referred above to have been eliminated from the GI tract section treated.

In a preferred embodiment, the shape of the layer is the same as that indicated above for the GI tract section, i.e. preferably tubular.

In a particular embodiment, the % in volume of the animal tissue of interest present in the casing with respect to the volume of all the tissues present in the casing is lower than 50%, 44%, 30%, 25%, 24%, 23%, 22%, 21%, 20%, 19%, 17%, 15%, 14%, 13%, 12%, 11%, 10% 9%, 8%, 7%, 6%, 5%, 4.5%, 4%, 3.5%, 3%, 2.5%, 2%, 1.5%, 1%, 0.9%, 0.8%, 0.7%, 0.6%, 0.5%, 0.4%, 0.3%, 0.2%, 0.1%, 0% preferably lower than 10%.

In a particular embodiment, the at least one tissue of interest comprises mesenteric tissue and the % in volume of the mesenteric tissue present in the casing with respect to the volume of all the tissues present in the casing is lower than 50%, 44%, 30%, 25%, 24%, 23%, 22%, 21%, 20%, 19%, 17%, 15%, 14%, 13%, 12%, 11%, 10% 9%, 8%, 7%, 6%, 5%, 4.5%, 4%, 3.5%, 3%, 2.5%, 2%, 1.5%, 1%, 0.9%, 0.8%, 0.7%, 0.6%, 0.5%, 0.4%, 0.3%, 0.2%, 0.1%, 0% preferably lower than 10%.

In a particular embodiment, the at least one tissue of interest comprises mesenteric adipose tissue and the % in volume of the mesenteric adipose tissue present in the casing with respect to the volume of all the tissues present in the casing is lower than 50%, 44%, 30%, 25%, 24%, 23%, 22%, 21%, 20%, 19%, 17%, 15%, 14%, 13%, 12%, 11%, 10% 9%, 8%, 7%, 6%, 5%, 4.5%, 4%, 3.5%, 3%, 2.5%, 2%, 1.5%, 1%, 0.9%, 0.8%, 0.7%, 0.6%, 0.5%, 0.4%, 0.3%, 0.2%, 0.1%, 0% preferably lower than 10%.

In a particular embodiment, the at least one tissue of interest comprises muscularis propia and the % in volume of the muscularis propia present in the casing with respect to the volume of all the tissues present in the casing is lower than 50%, 44%, 30%, 25%, 24%, 23%, 22%, 21%, 20%, 19%, 17%, 15%, 14%, 13%, 12%, 11%, 10% 9%, 8%, 7%, 6%, 5%, 4.5%, 4%, 3.5%, 3%, 2.5%, 2%, 1.5%, 1%, 0.9%, 0.8%, 0.7%, 0.6%, 0.5%, 0.4%, 0.3%, 0.2%, 0.1%, 0% preferably lower than 10%.

In a particular embodiment, the at least one tissue of interest comprises muscularis propia and the % in volume of the muscularis propia present in the casing with respect to the volume of all the tissues present in the casing is lower than 50%, 44%, 30%, 25%, 24%, 23%, 22%, 21%, 20%, 19%, 17%, 15%, 14%, 13%, 12%, 11%, 10% 9%, 8%, 7%, 6%, 5%, 4.5%, 4%, 3.5%, 3%, 2.5%, 2%, 1.5%, 1%, 0.9%, 0.8%, 0.7%, 0.6%, 0.5%, 0.4%, 0.3%, 0.2%, 0.1%, 0% preferably lower than 10%.

In a particular embodiment, the at least one tissue of interest comprises epithelium from the mucosa and the % in volume of the epithelium from the mucosa present in the casing with respect to the volume of all the tissues present in the casing is lower than 50%, 44%, 30%, 25%, 24%, 23%, 22%, 21%, 20%, 19%, 17%, 15%, 14%, 13%, 12%, 11%, 10% 9%, 8%, 7%, 6%, 5%, 4.5%, 4%, 3.5%, 3%, 2.5%, 2%, 1.5%, 1%, 0.9%, 0.8%, 0.7%, 0.6%, 0.5%, 0.4%, 0.3%, 0.2%, 0.1%, 0% preferably lower than 10%.

In a particular embodiment, the at least one tissue of interest comprises epithelium and lamina propia from the mucosa and the % in volume of said tissues present in the casing with respect to the volume of all the tissues present in the casing is lower than 50%, 44%, 30%, 25%, 24%, 23%, 22%, 21%, 20%, 19%, 17%, 15%, 14%, 13%, 12%, 11%, 10% 9%, 8%, 7%, 6%, 5%, 4.5%, 4%, 3.5%, 3%, 2.5%, 2%, 1.5%, 1%, 0.9%, 0.8%, 0.7%, 0.6%, 0.5%, 0.4%, 0.3%, 0.2%, 0.1%, 0% preferably lower than 10%. In a preferred embodiment, the lamina propia referred in the previous embodiment refers to the connective tissue of the lamina propia.

In a particular embodiment, the at least one tissue of interest comprises epithelium, lamina propia and muscularis mucosae from the mucosa and the % in volume of said tissues present in the casing with respect to the volume of all the tissues present in the casing is lower than 50%, 44%, 30%, 25%, 24%, 23%, 22%, 21%, 20%, 19%, 17%, 15%, 14%, 13%, 12%, 11%, 10% 9%, 8%, 7%, 6%, 5%, 4.5%, 4%, 3.5%, 3%, 2.5%, 2%, 1.5%, 1%, 0.9%, 0.8%, 0.7%, 0.6%, 0.5%, 0.4%, 0.3%, 0.2%, 0.1%, 0% preferably lower than 10%. In a preferred embodiment, the lamina propia referred in the previous embodiment refers to the connective tissue of the lamina propia.

In a particular embodiment, the at least one tissue of interest comprises mesenteric tissue and epithelium from the mucosa and the % in volume of said tissues present in the casing with respect to the volume of all the tissues present in the casing is lower than 50%, 44%, 30%, 25%, 24%, 23%, 22%, 21%, 20%, 19%, 17%, 15%, 14%, 13%, 12%, 11%, 10% 9%, 8%, 7%, 6%, 5%, 4.5%, 4%, 3.5%, 3%, 2.5%, 2%, 1.5%, 1%, 0.9%, 0.8%, 0.7%, 0.6%, 0.5%, 0.4%, 0.3%, 0.2%, 0.1%, 0% preferably lower than 10%.

In a particular embodiment, the at least one tissue of interest comprises mesenteric tissue, epithelium from the mucosa and lamina propia from the mucosa the % in volume of said tissues present in the casing with respect to the volume of all the tissues present in the casing is lower than 50%, 44%, 30%, 25%, 24%, 23%, 22%, 21 %, 20%, 19%, 17%, 15%, 14%, 13%, 12%, 11%, 10% 9%, 8%, 7%, 6%, 5%, 4.5%, 4%, 3.5%, 3%, 2.5%, 2%, 1.5%, 1%, 0.9%, 0.8%, 0.7%, 0.6%, 0.5%, 0.4%, 0.3%, 0.2%, 0.1%, 0% preferably lower than 10%. In a preferred embodiment, the lamina propia referred in the previous embodiment refers to the connective tissue of the lamina propia.

In a particular embodiment, the at least one tissue of interest comprises mesenteric tissue, epithelium from the mucosa, lamina propia from the mucosa and muscularis mucosae and the % in volume of said tissues present in the casing with respect to the volume of all the tissues present in the casing is lower than 50%, 44%, 30%, 25%, 24%, 23%, 22%, 21%, 20%, 19%, 17%, 15%, 14%, 13%, 12%, 11%, 10% 9%, 8%, 7%, 6%, 5%, 4.5%, 4%, 3.5%, 3%, 2.5%, 2%, 1.5%, 1%, 0.9%, 0.8%, 0.7%, 0.6%, 0.5%, 0.4%, 0.3%, 0.2%, 0.1%, 0% preferably lower than 10%.

In a particular embodiment, the at least one tissue of interest comprises mesenteric adipose tissue and epithelium from the mucosa and the % in volume of said tissues present in the casing with respect to the volume of all the tissues present in the casing is lower than 50%, 44%, 30%, 25%, 24%, 23%, 22%, 21%, 20%, 19%, 17%, 15%, 14%, 13%, 12%, 11%, 10% 9%, 8%, 7%, 6%, 5%, 4.5%, 4%, 3.5%, 3%, 2.5%, 2%, 1.5%, 1%, 0.9%, 0.8%, 0.7%, 0.6%, 0.5%, 0.4%, 0.3%, 0.2%, 0.1%, 0% preferably lower than 10%.

In a particular embodiment, the at least one tissue of interest comprises mesenteric adipose tissue, epithelium from the mucosa and lamina propia from the mucosa the % in volume of said tissues present in the casing with respect to the volume of all the tissues present in the casing is lower than 50%, 44%, 30%, 25%, 24%, 23%, 22%, 21%, 20%, 19%, 17%, 15%, 14%, 13%, 12%, 11%, 10% 9%, 8%, 7%, 6%, 5%, 4.5%, 4%, 3.5%, 3%, 2.5%, 2%, 1.5%, 1%, 0.9%, 0.8%, 0.7%, 0.6%, 0.5%, 0.4%, 0.3%, 0.2%, 0.1%, 0% preferably lower than 10%. In a preferred embodiment, the lamina propia referred in the previous embodiment refers to the connective tissue of the lamina propia.

In a particular embodiment, the at least one tissue of interest comprises mesenteric adipose tissue, epithelium from the mucosa, lamina propia from the mucosa and muscularis mucosae and the % in volume of said tissues present in the casing with respect to the volume of all the tissues present in the casing is lower than 50%, 44%, 30%, 25%, 24%, 23%, 22%, 21%, 20%, 19%, 17%, 15%, 14%, 13%, 12%, 11%, 10% 9%, 8%, 7%, 6%, 5%, 4.5%, 4%, 3.5%, 3%, 2.5%, 2%, 1.5%, 1%, 0.9%, 0.8%, 0.7%, 0.6%, 0.5%, 0.4%, 0.3%, 0.2%, 0.1%, 0% preferably lower than 10%.

In a particular embodiment, the at least one tissue of interest comprises mesenteric tissue, muscularis propia, epithelium from the mucosa and lamina propia from the mucosa the % in volume of said tissues present in the casing with respect to the volume of all the tissues present in the casing is lower than 50%, 44%, 30%, 25%, 24%, 23%, 22%, 21%, 20%, 19%, 17%, 15%, 14%, 13%, 12%, 11%, 10% 9%, 8%, 7%, 6%, 5%, 4.5%, 4%, 3.5%, 3%, 2.5%, 2%, 1.5%, 1%, 0.9%, 0.8%, 0.7%, 0.6%, 0.5%, 0.4%, 0.3%, 0.2%, 0.1%, 0% preferably lower than 10%. In a preferred embodiment, the lamina propia referred in the previous embodiment refers to the connective tissue of the lamina propia.

In a particular embodiment, the at least one tissue of interest comprises mesenteric tissue, muscularis propia, epithelium from the mucosa, lamina propia from the mucosa and muscularis mucosae and the % in volume of said tissues present in the casing with respect to the volume of all the tissues present in the casing is lower than 50%, 44%, 30%, 25%, 24%, 23%, 22%, 21%, 20%, 19%, 17%, 15%, 14%, 13%, 12%, 11%, 10% 9%, 8%, 7%, 6%, 5%, 4.5%, 4%, 3.5%, 3%, 2.5%, 2%, 1.5%, 1%, 0.9%, 0.8%, 0.7%, 0.6%, 0.5%, 0.4%, 0.3%, 0.2%, 0.1%, 0% preferably lower than 10%.

In a particular embodiment, the at least one tissue of interest comprises mesenteric adipose tissue, muscularis propia, and epithelium from the mucosa and the % in volume of said tissues present in the casing with respect to the volume of all the tissues present in the casing is lower than 50%, 44%, 30%, 25%, 24%, 23%, 22%, 21 %, 20%, 19%, 17%, 15%, 14%, 13%, 12%, 11%, 10% 9%, 8%, 7%, 6%, 5%, 4.5%, 4%, 3.5%, 3%, 2.5%, 2%, 1.5%, 1%, 0.9%, 0.8%, 0.7%, 0.6%, 0.5%, 0.4%, 0.3%, 0.2%, 0.1%, 0% preferably lower than 10%.

In a particular embodiment, the at least one tissue of interest comprises mesenteric adipose tissue, muscularis propia, epithelium from the mucosa and lamina propia from the mucosa the % in volume of said tissues present in the casing with respect to the volume of all the tissues present in the casing is lower than 50%, 44%, 30%, 25%, 24%, 23%, 22%, 21%, 20%, 19%, 17%, 15%, 14%, 13%, 12%, 11%, 10% 9%, 8%, 7%, 6%, 5%, 4.5%, 4%, 3.5%, 3%, 2.5%, 2%, 1.5%, 1%, 0.9%, 0.8%, 0.7%, 0.6%, 0.5%, 0.4%, 0.3%, 0.2%, 0.1%, 0% preferably lower than 10%. In a preferred embodiment, the lamina propia referred in the previous embodiment refers to the connective tissue of the lamina propia.

In a particular embodiment, the at least one tissue of interest comprises mesenteric adipose tissue, muscularis propia, epithelium from the mucosa, lamina propia from the mucosa and muscularis mucosae and the % in volume of said tissues present in the casing with respect to the volume of all the tissues present in the casing is lower than 50%, 44%, 30%, 25%, 24%, 23%, 22%, 21%, 20%, 19%, 17%, 15%, 14%, 13%, 12%, 11%, 10% 9%, 8%, 7%, 6%, 5%, 4.5%, 4%, 3.5%, 3%, 2.5%, 2%, 1.5%, 1%, 0.9%, 0.8%, 0.7%, 0.6%, 0.5%, 0.4%, 0.3%, 0.2%, 0.1%, 0% preferably lower than 10%.

Methods to determine the % in volume of the animal tissue of interest with respect to the volume of all the tissues present in the casing are well known by an expert in the field. Non-limiting examples of such methods include computerized tomography (TC), or Magnetic resonance imaging (MRI), wherein the volume of a tissue of interest (a soft tissue such as adipose tissue or a connective tissue) is determined by computer programs, or by multiplying the area of the tissue of interest identified in a slide by TC or MRI by the thickness of said slide. As well-known by an expert in the field, the casing can be re-hydrated before performing the methods indicated above. The application of said methods to determine the volume of a tissue of interest in a particular sample are commonly described in the literature, see for instance Mitisiopoulos N. et a I., 1998, J. Appl. Phys., DOI: 10.1152/jappl.1998.85.1.115).

In a particular embodiment, the amount of at least one tissue of interest present in the casing is measured as a surface instead than as a volume. In this case, all the embodiments herein apply, wherein the term "volume" is substituted by "surface" or "area". The methods used to determine the % in surface of the animal tissue of interest with respect to the surface of all tissues present in the casing are the same provided above when the volume of the tissue interest is measured, wherein the computer programs provide the area of the at least one tissue of interest, and said area is not multiplied by the thickness of the slide being analyzed. In a particular embodiment, the casing of the invention comprises at least 1, 2, 3, 4, 5, 6, 7, 8, 9 10 layers, preferably at least 1. In a particular embodiment, the casing comprises between 1 and 10 layers, between 1 and 6 layers, between 2 and 4 layers. In a preferred embodiment, the casing comprises 2-4 layers. In a preferred embodiment, the casing comprises 3 layers. In a particular embodiment, the casing comprises less than 6 layers, less than 5 layers, less than 4 layers, less than 3 layers, less than 1 layer. In a particular embodiment, the layers are disposed one on top of the other. In another embodiment, the layers are deposited one next to the other. In a preferred embodiment, part of the layers is deposited one on top of the other, and part of the layers are deposited one next to the other.

In a particular embodiment, the layers forming the casing comprise less than 50%, 44%, 30%, 25%, 24%, 23%, 22%, 21%, 20%, 19%, 17%, 15%, 14%, 13%, 12%, 11%, 10% 9%, 8%, 7%, 6%, 5%, 4.5%, 4%, 3.5%, 3%, 2.5%, 2%, 1.5%, 1%, 0.9%, 0.8%, 0.7%, 0.6%, 0.5%, 0.4%, 0.3%, 0.2%, 0.1%, 0% in volume, preferably less than 10% in volume, of at least one animal tissue of interest with respect to the weight of all the tissues present in said layer/s. In a preferred embodiment, said layers are isolated from a part of the large intestine. In another embodiment, said layers are isolated from a part of the small intestine. In another embodiment, said layers are isolated from a part of the small intestine or from a part of the small intestine.

In a particular embodiment, the at least one animal tissue of interest referred in the previous paragraph above comprises mesenteric tissue. In another embodiment, the at least one animal tissue of interest referred in the previous paragraph comprises mesenteric adipose tissue. In another embodiment, the at least one animal tissue of interest referred in the previous paragraph comprises muscularis propia. In another embodiment, the at least one animal tissue of interest referred in the previous paragraph comprises epithelium from the mucosa. In another embodiment, the at least one animal tissue of interest referred in the previous paragraph comprises epithelium from the mucosa and lamina propia, wherein the lamina propia preferably refers to the connective tissue of the lamina propia. In another embodiment, the at least one animal tissue of interest referred in the previous paragraph comprises epithelium from the mucosa, lamina propia and muscularis mucosae. In a particular embodiment, the at least one animal tissue of interest referred in the previous paragraph comprises mesenteric tissue, preferably mesenteric adipose tissue, and epithelium from the mucosa. In a particular embodiment, the at least one animal tissue of interest referred in the previous paragraph comprises mesenteric tissue, preferably mesenteric adipose tissue, epithelium from the mucosa and lamina propia from the mucosa, wherein lamina propia from the mucosa preferably refers to the connective tissue of the lamina propia. In a preferred embodiment, the at least one animal tissue of interest referred in the previous paragraph comprises mesenteric tissue, preferably mesenteric adipose tissue, epithelium from the mucosa, lamina propia from the mucosa, and muscularis mucosae. In a particular embodiment, the at least one animal tissue of interest referred in the previous paragraph comprises mesenteric tissue, preferably mesenteric adipose tissue, muscularis propia, and epithelium from the mucosa. In a particular embodiment, the at least one animal tissue of interest referred in the previous paragraph comprises mesenteric tissue, preferably mesenteric adipose tissue, muscularis propia, epithelium from the mucosa and lamina propia from the mucosa, wherein lamina propia from the mucosa preferably refers to the connective tissue of the lamina propia. In a preferred embodiment, the at least one animal tissue of interest referred in the previous paragraph comprises mesenteric tissue, preferably mesenteric adipose tissue, muscularis propia, epithelium from the mucosa, lamina propia from the mucosa, and muscularis mucosae.

In a particular embodiment, at least 1 of the layers forming the casing comprise less than 50%, 44%, 30%, 25%, 24%, 23%, 22%, 21%, 20%, 19%, 17%, 15%, 14%, 13%, 12%, 11%, 10% 9%, 8%, 7%, 6%, 5%, 4.5%, 4%, 3.5%, 3%, 2.5%, 2%, 1.5%, 1%, 0.9%, 0.8%, 0.7%, 0.6%, 0.5%, 0.4%, 0.3%, 0.2%, 0.1%, 0% in volume, preferably less than 10% in volume, of at least one animal tissue of interest with respect to the weight of all the tissues present in said layer/s. In a preferred embodiment, said at least one layer is isolated from a part of the large intestine. In a particular embodiment, said at least one layer is isolated from a part of the small intestine. In another embodiment, said at least one layer is isolated from a part of the large intestine and from the small intestine.

In a particular embodiment, the at least one animal tissue of interest referred in the previous paragraph above comprises mesenteric tissue. In another embodiment, the at least one animal tissue of interest referred in the previous paragraph comprises mesenteric adipose tissue. In another embodiment, the at least one animal tissue of interest referred in the previous paragraph comprises muscularis propia. In another embodiment, the at least one animal tissue of interest referred in the previous paragraph comprises epithelium from the mucosa. In another embodiment, the at least one animal tissue of interest referred in the previous paragraph comprises epithelium from the mucosa and lamina propia, wherein the lamina propia preferably refers to the connective tissue of the lamina propia. In another embodiment, the at least one animal tissue of interest referred in the previous paragraph comprises epithelium from the mucosa, lamina propia and muscularis mucosae. In a particular embodiment, the at least one animal tissue of interest referred in the previous paragraph comprises mesenteric tissue, preferably mesenteric adipose tissue, and epithelium from the mucosa. In a particular embodiment, the at least one animal tissue of interest referred in the previous paragraph comprises mesenteric tissue, preferably mesenteric adipose tissue, epithelium from the mucosa and lamina propia from the mucosa, wherein lamina propia from the mucosa preferably refers to the connective tissue of the lamina propia. In a particular embodiment, the at least one animal tissue of interest referred in the previous paragraph comprises mesenteric tissue, preferably mesenteric adipose tissue, epithelium from the mucosa, lamina propia from the mucosa, and muscularis mucosae. In a particular embodiment, the at least one animal tissue of interest referred in the previous paragraph comprises mesenteric tissue, preferably mesenteric adipose tissue, muscularis propia, and epithelium from the mucosa. In a particular embodiment, the at least one animal tissue of interest referred in the previous paragraph comprises mesenteric tissue, preferably mesenteric adipose tissue, muscularis propia, epithelium from the mucosa and lamina propia from the mucosa, wherein lamina propia from the mucosa preferably refers to the connective tissue of the lamina propia. In a preferred embodiment, the at least one animal tissue of interest referred in the previous paragraph comprises mesenteric tissue, preferably mesenteric adipose tissue, muscularis propia, epithelium from the mucosa, lamina propia from the mucosa, and muscularis mucosae.

In another particular embodiment, at least 2 of the layers forming the casing comprise less than 50%, 44%, 30%, 25%, 24%, 23%, 22%, 21%, 20%, 19%, 17%, 15%, 14%, 13%, 12%, 11%, 10% 9%, 8%, 7%, 6%, 5%, 4.5%, 4%, 3.5%, 3%, 2.5%, 2%, 1.5%, 1%, 0.9%, 0.8%, 0.7%, 0.6%, 0.5%, 0.4%, 0.3%, 0.2%, 0.1%, 0% in volume, preferably less than 10% in volume, of at least one animal tissue of interest with respect to the weight of all the tissues present in said layer/s. In a preferred embodiment, said at least 2 layers are isolated from a part of the large intestine. In another embodiment, said at least 2 layers are isolated from a part of the small intestine. In a particular embodiment, said at least 2 layers are isolated from a part of the small intestine or from a part of the small intestine.

In a particular embodiment, the at least one animal tissue of interest referred in the previous paragraph above comprises mesenteric tissue. In another embodiment, the at least one animal tissue of interest referred in the previous paragraph comprises mesenteric adipose tissue. In another embodiment, the at least one animal tissue of interest referred in the previous paragraph comprises muscularis propia. In another embodiment, the at least one animal tissue of interest referred in the previous paragraph comprises epithelium from the mucosa. In another embodiment, the at least one animal tissue of interest referred in the previous paragraph comprises epithelium from the mucosa and lamina propia, wherein the lamina propia preferably refers to the connective tissue of the lamina propia. In another embodiment, the at least one animal tissue of interest referred in the previous paragraph comprises epithelium from the mucosa, lamina propia and muscularis mucosae. In a particular embodiment, the at least one animal tissue of interest referred in the previous paragraph comprises mesenteric tissue, preferably mesenteric adipose tissue, and epithelium from the mucosa. In a particular embodiment, the at least one animal tissue of interest referred in the previous paragraph comprises mesenteric tissue, preferably mesenteric adipose tissue, epithelium from the mucosa and lamina propia from the mucosa, wherein lamina propia from the mucosa preferably refers to the connective tissue of the lamina propia. In a particular embodiment, the at least one animal tissue of interest referred in the previous paragraph comprises mesenteric tissue, preferably mesenteric adipose tissue, epithelium from the mucosa, lamina propia from the mucosa, and muscularis mucosae. In a particular embodiment, the at least one animal tissue of interest referred in the previous paragraph comprises mesenteric tissue, preferably mesenteric adipose tissue, muscularis propia, and epithelium from the mucosa. In a particular embodiment, the at least one animal tissue of interest referred in the previous paragraph comprises mesenteric tissue, preferably mesenteric adipose tissue, muscularis propia, epithelium from the mucosa and lamina propia from the mucosa, wherein lamina propia from the mucosa preferably refers to the connective tissue of the lamina propia. In a preferred embodiment, the at least one animal tissue of interest referred in the previous paragraph comprises mesenteric tissue, preferably mesenteric adipose tissue, muscularis propia, epithelium from the mucosa, lamina propia from the mucosa, and muscularis mucosae.

In another particular embodiment, at least 3 of the layers forming the casing comprise less than 50%, 44%, 30%, 25%, 24%, 23%, 22%, 21%, 20%, 19%, 17%, 15%, 14%, 13%, 12%, 11%, 10% 9%, 8%, 7%, 6%, 5%, 4.5%, 4%, 3.5%, 3%, 2.5%, 2%, 1.5%, 1%, 0.9%, 0.8%, 0.7%, 0.6%, 0.5%, 0.4%, 0.3%, 0.2%, 0.1%, 0% in volume, preferably less than 10% in volume, of at least one animal tissue of interest with respect to the weight of all the tissues present in said layer/s. In a preferred embodiment, said at least 3 layers are isolated from a part of the large intestine. In a particular embodiment, said at least 3 layers are isolated from a part of the small intestine. In another embodiment, said at least 3 layers are isolated from a part of the small intestine or from a part of the small intestine.

In a particular embodiment, the at least one animal tissue of interest referred in the previous paragraph above comprises mesenteric tissue. In another embodiment, the at least one animal tissue of interest referred in the previous paragraph comprises mesenteric adipose tissue.. In another embodiment, the at least one animal tissue of interest referred in the previous paragraph comprises muscularis propia. In another embodiment, the at least one animal tissue of interest referred in the previous paragraph comprises epithelium from the mucosa. In another embodiment, the at least one animal tissue of interest referred in the previous paragraph comprises epithelium from the mucosa and lamina propia, wherein the lamina propia preferably refers to the connective tissue of the lamina propia. In another embodiment, the at least one animal tissue of interest referred in the previous paragraph comprises epithelium from the mucosa, lamina propia and muscularis mucosae. In a particular embodiment, the at least one animal tissue of interest referred in the previous paragraph comprises mesenteric tissue, preferably mesenteric adipose tissue, and epithelium from the mucosa. In a particular embodiment, the at least one animal tissue of interest referred in the previous paragraph comprises mesenteric tissue, preferably mesenteric adipose tissue, epithelium from the mucosa and lamina propia from the mucosa, wherein lamina propia from the mucosa preferably refers to the connective tissue of the lamina propia. In a particular embodiment, the at least one animal tissue of interest referred in the previous paragraph comprises mesenteric tissue, preferably mesenteric adipose tissue, epithelium from the mucosa, lamina propia from the mucosa, and muscularis mucosae. In a particular embodiment, the at least one animal tissue of interest referred in the previous paragraph comprises mesenteric tissue, preferably mesenteric adipose tissue, muscularis propia, and epithelium from the mucosa. In a particular embodiment, the at least one animal tissue of interest referred in the previous paragraph comprises mesenteric tissue, preferably mesenteric adipose tissue, muscularis propia, epithelium from the mucosa and lamina propia from the mucosa, wherein lamina propia from the mucosa preferably refers to the connective tissue of the lamina propia. In a preferred embodiment, the at least one animal tissue of interest referred in the previous paragraph comprises mesenteric tissue, preferably mesenteric adipose tissue, muscularis propia, epithelium from the mucosa, lamina propia from the mucosa, and muscularis mucosae.

In another particular embodiment, at least 4 of the layers forming the casing comprise less than 50%, 44%, 30%, 25%, 24%, 23%, 22%, 21%, 20%, 19%, 17%, 15%, 14%, 13%,12%,11%,10% 9%, 8%, 7%, 6%, 5%, 4.5%, 4%, 3.5%, 3%, 2.5%, 2%, 1.5%, 1%, 0.9%, 0.8%, 0.7%, 0.6%, 0.5%, 0.4%, 0.3%, 0.2%, 0.1%, 0% in volume, preferably less than 10% in volume, of at least one animal tissue of interest with respect to the weight of all the tissues present in said layer/s. In a preferred embodiment, said at least 4 layers are isolated from a part of the large intestine. In a particular embodiment, said at least 4 layers are isolated from a part of the small intestine. In another embodiment, said at least 4 layers are isolated from a part of the small intestine or from a part of the small intestine.

In a particular embodiment, the at least one animal tissue of interest referred in the previous paragraph above comprises mesenteric tissue. In another embodiment, the at least one animal tissue of interest referred in the previous paragraph comprises mesenteric adipose tissue.. In another embodiment, the at least one animal tissue of interest referred in the previous paragraph comprises muscularis propia. In another embodiment, the at least one animal tissue of interest referred in the previous paragraph comprises epithelium from the mucosa. In another embodiment, the at least one animal tissue of interest referred in the previous paragraph comprises epithelium from the mucosa and lamina propia, wherein the lamina propia preferably refers to the connective tissue of the lamina propia. In another embodiment, the at least one animal tissue of interest referred in the previous paragraph comprises epithelium from the mucosa, lamina propia and muscularis mucosae. In a particular embodiment, the at least one animal tissue of interest referred in the previous paragraph comprises mesenteric tissue, preferably mesenteric adipose tissue, and epithelium from the mucosa. In a particular embodiment, the at least one animal tissue of interest referred in the previous paragraph comprises mesenteric tissue, preferably mesenteric adipose tissue, epithelium from the mucosa and lamina propia from the mucosa, wherein lamina propia from the mucosa preferably refers to the connective tissue of the lamina propia. In a particular embodiment, the at least one animal tissue of interest referred in the previous paragraph comprises mesenteric tissue, preferably mesenteric adipose tissue, epithelium from the mucosa, lamina propia from the mucosa, and muscularis mucosae. In a particular embodiment, the at least one animal tissue of interest referred in the previous paragraph comprises mesenteric tissue, preferably mesenteric adipose tissue, muscularis propia, and epithelium from the mucosa. In a particular embodiment, the at least one animal tissue of interest referred in the previous paragraph comprises mesenteric tissue, preferably mesenteric adipose tissue, muscularis propia, epithelium from the mucosa and lamina propia from the mucosa, wherein lamina propia from the mucosa preferably refers to the connective tissue of the lamina propia. In a preferred embodiment, the at least one animal tissue of interest referred in the previous paragraph comprises mesenteric tissue, preferably mesenteric adipose tissue, muscularis propia, epithelium from the mucosa, lamina propia from the mucosa, and muscularis mucosae.

In another particular embodiment, at least 5 of the layers forming the casing comprise less than 50%, 44%, 30%, 25%, 24%, 23%, 22%, 21%, 20%, 19%, 17%, 15%, 14%, 13%,12%,11%,10% 9%, 8%, 7%, 6%, 5%, 4.5%, 4%, 3.5%, 3%, 2.5%, 2%, 1.5%, 1%, 0.9%, 0.8%, 0.7%, 0.6%, 0.5%, 0.4%, 0.3%, 0.2%, 0.1%, 0% in volume, preferably less than 10% in volume, of at least one animal tissue of interest with respect to the weight of all the tissues present in said layer/s. In a preferred embodiment, said at least 5 layers are isolated from a part of the large intestine. In a particular embodiment, said at least 5 layers are isolated from a part of the small intestine. In another embodiment, said at least 5 layers are isolated from a part of the small intestine or from a part of the small intestine.

In a particular embodiment, the at least one animal tissue of interest referred in the previous paragraph above comprises mesenteric tissue. In another embodiment, the at least one animal tissue of interest referred in the previous paragraph comprises mesenteric adipose tissue.. In another embodiment, the at least one animal tissue of interest referred in the previous paragraph comprises muscularis propia. In another embodiment, the at least one animal tissue of interest referred in the previous paragraph comprises epithelium from the mucosa. In another embodiment, the at least one animal tissue of interest referred in the previous paragraph comprises epithelium from the mucosa and lamina propia, wherein the lamina propia preferably refers to the connective tissue of the lamina propia. In another embodiment, the at least one animal tissue of interest referred in the previous paragraph comprises epithelium from the mucosa, lamina propia and muscularis mucosae. In a particular embodiment, the at least one animal tissue of interest referred in the previous paragraph comprises mesenteric tissue, preferably mesenteric adipose tissue, and epithelium from the mucosa. In a particular embodiment, the at least one animal tissue of interest referred in the previous paragraph comprises mesenteric tissue, preferably mesenteric adipose tissue, epithelium from the mucosa and lamina propia from the mucosa, wherein lamina propia from the mucosa preferably refers to the connective tissue of the lamina propia. In a particular embodiment, the at least one animal tissue of interest referred in the previous paragraph comprises mesenteric tissue, preferably mesenteric adipose tissue, epithelium from the mucosa, lamina propia from the mucosa, and muscularis mucosae. In a particular embodiment, the at least one animal tissue of interest referred in the previous paragraph comprises mesenteric tissue, preferably mesenteric adipose tissue, muscularis propia, and epithelium from the mucosa. In a particular embodiment, the at least one animal tissue of interest referred in the previous paragraph comprises mesenteric tissue, preferably mesenteric adipose tissue, muscularis propia, epithelium from the mucosa and lamina propia from the mucosa, wherein lamina propia from the mucosa preferably refers to the connective tissue of the lamina propia. In a preferred embodiment, the at least one animal tissue of interest referred in the previous paragraph comprises mesenteric tissue, preferably mesenteric adipose tissue, muscularis propia, epithelium from the mucosa, lamina propia from the mucosa, and muscularis mucosae.

In another particular embodiment, at least 6 of the layers forming the casing comprise less than 50%, 40%, 30%, 25%, 24%, 23%, 22%, 21%, 20%, 19%, 17%, 15%, 14%, 13%, 12%, 11%, 10%, 9%, 8%, 7%, 6%, 5%, 4.5%, 4%, 3.5%, 3%, 2.5%, 2%, 1.5%, 1%, 0.9%, 0.8%, 0.7%, 0.6%, 0.5%, 0.4%, 0.3%, 0.2%, 0.1%, 0% in volume, preferably less than 10% in volume, of at least one animal tissue of interest with respect to the weight of all the tissues present in said layer/s. In a preferred embodiment, said at least 6 layers are isolated from a part of the large intestine. In a particular embodiment, said at least 6 layers are isolated from a part of the small intestine. In another embodiment, said at least 6 layers are isolated from a part of the small intestine or from a part of the small intestine.

In a particular embodiment, the at least one animal tissue of interest referred in the previous paragraph above comprises mesenteric tissue. In another embodiment, the at least one animal tissue of interest referred in the previous paragraph comprises mesenteric adipose tissue. In another embodiment, the at least one animal tissue of interest referred in the previous paragraph comprises muscularis propia. In another embodiment, the at least one animal tissue of interest referred in the previous paragraph comprises epithelium from the mucosa. In another embodiment, the at least one animal tissue of interest referred in the previous paragraph comprises epithelium from the mucosa and lamina propia, wherein the lamina propia preferably refers to the connective tissue of the lamina propia. In another embodiment, the at least one animal tissue of interest referred in the previous paragraph comprises epithelium from the mucosa, lamina propia and muscularis mucosae. In a particular embodiment, the at least one animal tissue of interest referred in the previous paragraph comprises mesenteric tissue, preferably mesenteric adipose tissue, and epithelium from the mucosa. In a particular embodiment, the at least one animal tissue of interest referred in the previous paragraph comprises mesenteric tissue, preferably mesenteric adipose tissue, epithelium from the mucosa and lamina propia from the mucosa, wherein lamina propia from the mucosa preferably refers to the connective tissue of the lamina propia. In a particular embodiment, the at least one animal tissue of interest referred in the previous paragraph comprises mesenteric tissue, preferably mesenteric adipose tissue, epithelium from the mucosa, lamina propia from the mucosa, and muscularis mucosae. In a particular embodiment, the at least one animal tissue of interest referred in the previous paragraph comprises mesenteric tissue, preferably mesenteric adipose tissue, muscularis propia, and epithelium from the mucosa. In a particular embodiment, the at least one animal tissue of interest referred in the previous paragraph comprises mesenteric tissue, preferably mesenteric adipose tissue, muscularis propia, epithelium from the mucosa and lamina propia from the mucosa, wherein lamina propia from the mucosa preferably refers to the connective tissue of the lamina propia. In a preferred embodiment, the at least one animal tissue of interest referred in the previous paragraph comprises mesenteric tissue, preferably mesenteric adipose tissue, muscularis propia, epithelium from the mucosa, lamina propia from the mucosa, and muscularis mucosae.

In a particular embodiment, the amount of at least one tissue of interest present in the layers indicated above is measured as a surface instead than as a volume. In this case, all the embodiments herein apply, wherein the term "volume" is substituted by "surface" or "area". The methods used to determine the % in surface of the animal tissue of interest with respect to the surface of all tissues present in the layer are the same indicated above when the volume of the tissue interest is measured, wherein the computer programs provide the area of the at least one tissue of interest, and said area is not multiplied by the thickness of the slide being analyzed.

In a particular embodiment, all the layers forming the casing of the invention derive from a GI tract as defined in any of the embodiment above. In a particular embodiment, they derive from a GI tract isolated from the same part of the GI. Thus, in a particular embodiment, the layers forming the casing of the invention derive from GI tract sections that comprise the same organ/s or parts thereof. In a particular embodiment, all the layers forming the casing derive from GI sections isolated from the small intestine. In a particular embodiment, all the layers forming the casing derive from GI sections isolated from the large intestine. In a particular embodiment, all the layers forming the casing derive from GI sections isolated from the stomach.

In another particular embodiment, at least 1, 2, 3, 4, 5, 6, 7, 8, 9, 10, preferably at least 1 of the layers forming the casing derives from GI tract sections isolated from a part of the large intestine. In another particular embodiment, at least 1, 2, 3, 4, 5, 6, 7, 8, 9, 10, preferably at least 1 of the layers forming the casing derives from GI tract sections isolated from a part of the small intestine. In another particular embodiment, at least 1, 2, 3, 4, 5, 6, 7, 8, 9, 10 preferably at least 1, of the layers forming the casing derives from GI tract sections isolated from a part of the stomach.

In a particular embodiment, at least 1 layer from the casing derives from GI tract sections isolated from a part of the large intestine and at least 1, 2, 3, 4, 5, 6, 7, 8, 9, 10 preferably at least 1 of the layers forming the casing derives from GI tract sections isolated from a part of the small intestine. In another particular embodiment, at least 2 layers from the casing derive from GI tract sections isolated from a part of the large intestine and at least 1, 2, 3, 4, 5, 6, 7, 8, 9, 10 preferably at least 1 of the layers forming the casing derives from GI tract sections isolated from a part of the small intestine. In another particular embodiment, at least 3 layers from the casing derive from GI tract sections isolated from a part of the large intestine and at least 1, 2, 3, 4, 5, 6, 7, 8, 9, 10 preferably at least 1 of the layers forming the casing derives from GI tract sections isolated from a part of the small intestine. In another particular embodiment, at least 4 layers from the casing derive from GI tract sections isolated from a part of the large intestine and at least 1, 2, 3, 4, 5, 6, 7, 8, 9 10, preferably at least 1 of the layers forming the casing derives from GI tract sections isolated from a part of the small intestine. In another particular embodiment, at least 5 layers from the casing derive from GI tract sections isolated from a part of the large intestine and at least 1, 2, 3, 4, 5, 6, 7, 8, 9 10, preferably at least 1 of the layers forming the casing derives from GI tract sections isolated from a part of the small intestine.

In a particular embodiment, at least 1 layer from the casing derives from GI tract sections isolated from a part of the small intestine and at least 1, 2, 3, 4, 5, 6, 7, 8, 9, 10 preferably at least 1 of the layers forming the casing derives from GI tract sections isolated from a part of the large intestine. In a particular embodiment, at least 2 layers from the casing derive from GI tract sections isolated from a part of the small intestine and at least 1, 2, 3, 4, 5, 6, 7, 8, 9, 10 preferably at least 1 of the layers forming the casing derives from GI tract sections isolated from a part of the large intestine. In a particular embodiment, at least 3 layers from the casing derive from GI tract sections isolated from a part of the small intestine and at least 1, 2, 3, 4, 5, 6, 7, 8, 9, 10 preferably at least 1 of the layers forming the casing derives from GI tract sections isolated from a part of the large intestine. In a particular embodiment, at least 4 layers from the casing derive from GI tract sections isolated from a part of the small intestine and at least 1, 2, 3, 4, 5, 6, 7, 8, 9, 10 preferably at least 1 of the layers forming the casing derives from GI tract sections isolated from a part of the large intestine. In a particular embodiment, at least 5 layers from the casing derive from GI tract sections isolated from a part of the small intestine and at least 1, 2, 3, 4, 5, 6, 7, 8, 9, 10 preferably at least 1 of the layers forming the casing derives from GI tract sections isolated from a part of the large intestine.

In a preferred embodiment, the layers from the small intestine form the interior cavity of the casing. Thus, in a preferred embodiment, at least 1, 2, 3, 4, 5, 6, 7, 8, 9, 10 of the innermost layers of the casing derive from GI sections isolated from a part of the small intestine. In some cases, at least one layer derived from a GI tract isolated from a part of the large intestine or from a part of the stomach is intercalated between said layers. However, in a preferred embodiment, said layers are provided in a consecutive manner, i.e. are deposited one on top of the other without including any layer derived from another part of the IG tract between any of them. Thus, in a particular embodiment, from the innermost to the outermost layer of the casing, at least 1, 2, 3, 4, 5, 6, 7, 8, 9 10 consecutive layers derive from GI tract sections isolated from the small intestine. In a particular embodiment, from the innermost to the outermost layer of the casing, 1-10, 1-6, 1-4, 1-3, 1-2, preferably, 1-3 consecutive layers of the casing derive from GI sections isolated from a part of the small intestine. However, in a particular embodiment, from the innermost to the outermost layer of the casing, at least 1, 2, 3, 4, 5, 6, 7, 8, 9 10 consecutive layers derive from GI tract sections isolated from the large intestine. In a particular embodiment, from the innermost to the outermost layer of the casing, 1-10, 1-6, 1-4, 1-3, 1-2, preferably, 1-3 consecutive layers of the casing derive from GI sections isolated from a part of the large intestine.

In another particular embodiment, at least 1, 2, 3, 4, 5, 6, 7, 8, 9 10, of the outermost layers of the casing derive from GI sections isolated from the large intestine. In some cases, at least one layer derived from a GI tract isolated from a part of the small intestine or from a part of the stomach is intercalated between said layers. However, in a preferred embodiment, said layers are provided in a consecutive manner, i.e. are deposited one on top of the other without including any layer derived from another part of the IG tract between any of them. Thus, in a particular embodiment, from the outermost to the innermost layer of the casing, at least 1, 2, 3, 4, 5, 6, 7, 8, 9 10 consecutive layers derive from GI tract sections isolated from a part of the large intestine. In a particular embodiment, from the outermost to the innermost layer of the casing, 1-10, 1-6, 1-4, 1-3, 1-2, preferably, 1-3 layers of the casing derive from GI sections isolated from a part of the large intestine. In another particular embodiment, from the outermost to the innermost layer of the casing, at least 1, 2, 3, 4, 5, 6, 7, 8, 9 10 consecutive layers derive from GI tract sections isolated from a part of the small intestine. In a particular embodiment, from the outermost to the innermost layer of the casing, 1-10, 1-6, 1-4, 1-3, 1-2, preferably, 1-3 layers of the casing derive from GI sections isolated from a part of the small intestine.

The expression "innermost layers of the casing", as used herein, refers to the layers that directly follow the innermost layer of the casing, when looking at the layers in a direction from the inside to outside direction of the casing, i.e. from the internal cavity of the casing to the exterior of the casing.

The expression "outermost layers of the casing", as used herein, refers to the layers that directly follow the outermost layer of the casing, when looking at the layers in a direction from an outside to inside direction of the casing, i.e. from the exterior to the internal cavity of the casing.

In a preferred embodiment, the layers forming the casing that derive from a GI tract section isolated from a part of the large intestine, comprise less than 50%, 40%, 30%, 25%, 24%, 23%, 22%, 21%, 20%, 19%, 17%, 15%, 14%, 13%, 12%, 11%, 10% 9%, 8%, 7%, 6%, 5%, 4.5%, 4%, 3.5%, 3%, 2.5%, 2%, 1.5%, 1%, 0.9%, 0.8%, 0.7%, 0.6%, 0.5%, 0.4%, 0.3%, 0.2%, 0.1 %, 0% in volume, preferably less than 10% in volume, of at least one animal tissue of interest with respect to the weight of all the tissues present in said layer/s.

In a particular embodiment, the at least one animal tissue of interest referred in the previous paragraph above comprises mesenteric tissue. In another embodiment, the at least one animal tissue of interest referred in the previous paragraph comprises adipose mesenteric tissue. In another embodiment, the at least one animal tissue of interest referred in the previous paragraph comprises muscularis propia. In another embodiment, the at least one animal tissue of interest referred in the previous paragraph comprises epithelium from the mucosa. In another embodiment, the at least one animal tissue of interest referred in the previous paragraph comprises epithelium from the mucosa and lamina propia, wherein the lamina propia preferably refers to the connective tissue of the lamina propia. In another embodiment, the at least one animal tissue of interest referred in the previous paragraph comprises epithelium from the mucosa, lamina propia and muscularis mucosae. In a particular embodiment, the at least one animal tissue of interest referred in the previous paragraph comprises mesenteric tissue, preferably mesenteric adipose tissue, and epithelium from the mucosa. In a particular embodiment, the at least one animal tissue of interest referred in the previous paragraph comprises mesenteric tissue, preferably mesenteric adipose tissue, epithelium from the mucosa and lamina propia from the mucosa, wherein lamina propia from the mucosa preferably refers to the connective tissue of the lamina propia. In a particular embodiment, the at least one animal tissue of interest referred in the previous paragraph comprises mesenteric tissue, preferably mesenteric adipose tissue, epithelium from the mucosa, lamina propia from the mucosa, and muscularis mucosae. In a particular embodiment, the at least one animal tissue of interest referred in the previous paragraph comprises mesenteric tissue, preferably mesenteric adipose tissue, muscularis propia, and epithelium from the mucosa. In a particular embodiment, the at least one animal tissue of interest referred in the previous paragraph comprises mesenteric tissue, preferably mesenteric adipose tissue, muscularis propia, epithelium from the mucosa and lamina propia from the mucosa, wherein lamina propia from the mucosa preferably refers to the connective tissue of the lamina propia. In a preferred embodiment, the at least one animal tissue of interest referred in the previous paragraph comprises mesenteric tissue, preferably mesenteric adipose tissue, muscularis propia, epithelium from the mucosa, lamina propia from the mucosa, and muscularis mucosae.

In another preferred embodiment, the layers forming the casing that derive from a GI tract section isolated from a part of the small intestine, comprise less than 50%, 40%, 30%, 25%, 24%, 23%, 22%, 21%, 20%, 19%, 17%, 15%, 14%, 13%, 12%, 11%, 10% 9%, 8%, 7%, 6%, 5%, 4.5%, 4%, 3.5%, 3%, 2.5%, 2%, 1.5%, 1%, 0.9%, 0.8%, 0.7%, 0.6%, 0.5%, 0.4%, 0.3%, 0.2%, 0.1%, 0% in volume, preferably less than 10% in volume, of at least one animal tissue of interest with respect to the weight of all the tissues present in said layer/s.

In a particular embodiment, the at least one animal tissue of interest referred in the previous paragraph above comprises mesenteric tissue. In another embodiment, the at least one animal tissue of interest referred in the previous paragraph comprises adipose mesenteric tissue. In another embodiment, the at least one animal tissue of interest referred in the previous paragraph comprises muscularis propia. In another embodiment, the at least one animal tissue of interest referred in the previous paragraph comprises epithelium from the mucosa. In another embodiment, the at least one animal tissue of interest referred in the previous paragraph comprises epithelium from the mucosa and lamina propia, wherein the lamina propia preferably refers to the connective tissue of the lamina propia. In another embodiment, the at least one animal tissue of interest referred in the previous paragraph comprises epithelium from the mucosa, lamina propia and muscularis mucosae. In a particular embodiment, the at least one animal tissue of interest referred in the previous paragraph comprises mesenteric tissue, preferably mesenteric adipose tissue, and epithelium from the mucosa. In a particular embodiment, the at least one animal tissue of interest referred in the previous paragraph comprises mesenteric tissue, preferably mesenteric adipose tissue, epithelium from the mucosa and lamina propia from the mucosa, wherein lamina propia from the mucosa preferably refers to the connective tissue of the lamina propia. In a particular embodiment, the at least one animal tissue of interest referred in the previous paragraph comprises mesenteric tissue, preferably mesenteric adipose tissue, epithelium from the mucosa, lamina propia from the mucosa, and muscularis mucosae. In a particular embodiment, the at least one animal tissue of interest referred in the previous paragraph comprises mesenteric tissue, preferably mesenteric adipose tissue, muscularis propia, and epithelium from the mucosa. In a particular embodiment, the at least one animal tissue of interest referred in the previous paragraph comprises mesenteric tissue, preferably mesenteric adipose tissue, muscularis propia, epithelium from the mucosa and lamina propia from the mucosa, wherein lamina propia from the mucosa preferably refers to the connective tissue of the lamina propia. In a preferred embodiment, the at least one animal tissue of interest referred in the previous paragraph comprises mesenteric tissue, preferably mesenteric adipose tissue, muscularis propia, epithelium from the mucosa, lamina propia from the mucosa, and muscularis mucosae.

In another preferred embodiment, the layers forming the casing that derive from a GI tract section isolated from a part of the stomach, comprise less than 50%, 40%, 30%, 25%, 24%, 23%, 22%, 21%, 20%, 19%, 17%, 15%, 14%, 13%, 12%, 11%, 10% 9%, 8%, 7%, 6%, 5%, 4.5%, 4%, 3.5%, 3%, 2.5%, 2%, 1.5%, 1%, 0.9%, 0.8%, 0.7%, 0.6%, 0.5%, 0.4%, 0.3%, 0.2%, 0.1 %, 0% in volume, preferably less than 10% in volume, of at least one animal tissue of interest with respect to the weight of all the tissues present in said layer/s.

In a particular embodiment, the at least one animal tissue of interest referred in the previous paragraph above comprises mesenteric tissue. In another embodiment, the at least one animal tissue of interest referred in the previous paragraph comprises adipose mesenteric tissue. In another embodiment, the at least one animal tissue of interest referred in the previous paragraph comprises muscularis propia. In another embodiment, the at least one animal tissue of interest referred in the previous paragraph comprises epithelium from the mucosa. In another embodiment, the at least one animal tissue of interest referred in the previous paragraph comprises epithelium from the mucosa and lamina propia, wherein the lamina propia preferably refers to the connective tissue of the lamina propia. In another embodiment, the at least one animal tissue of interest referred in the previous paragraph comprises epithelium from the mucosa, lamina propia and muscularis mucosae. In a particular embodiment, the at least one animal tissue of interest referred in the previous paragraph comprises mesenteric tissue, preferably mesenteric adipose tissue, and epithelium from the mucosa. In a particular embodiment, the at least one animal tissue of interest referred in the previous paragraph comprises mesenteric tissue, preferably mesenteric adipose tissue, epithelium from the mucosa and lamina propia from the mucosa, wherein lamina propia from the mucosa preferably refers to the connective tissue of the lamina propia. In a particular embodiment, the at least one animal tissue of interest referred in the previous paragraph comprises mesenteric tissue, preferably mesenteric adipose tissue, epithelium from the mucosa, lamina propia from the mucosa, and muscularis mucosae. In a particular embodiment, the at least one animal tissue of interest referred in the previous paragraph comprises mesenteric tissue, preferably mesenteric adipose tissue, muscularis propia, and epithelium from the mucosa. In a particular embodiment, the at least one animal tissue of interest referred in the previous paragraph comprises mesenteric tissue, preferably mesenteric adipose tissue, muscularis propia, epithelium from the mucosa and lamina propia from the mucosa, wherein lamina propia from the mucosa preferably refers to the connective tissue of the lamina propia. In a preferred embodiment, the at least one animal tissue of interest referred in the previous paragraph comprises mesenteric tissue, preferably mesenteric adipose tissue, muscularis propia, epithelium from the mucosa, lamina propia from the mucosa, and muscularis mucosae.

In a particular embodiment, the casing is eatable. In a particular embodiment, the continent of the casing as referred herein, is an eatable continent. In a preferred embodiment, the continent of the casing, as referred herein, is an eatable dough.

The term "eatable", as used herein, refers to the term well-known by an expert in the field. The term refers to the characteristic of compound or material, that once ingested by a particular organism, it can be metabolized by said organisms to provide energy or the basic elements conforming the proteins, lipids, nucleic acids, and some carbohydrates required for the well-functioning of said organisms. As well-understood by a skilled person, an eatable compound is not harmful, and preferably helpful, for the well-functioning (i.e. for the healthy functioning) of the organism that ingests it.

In a particular embodiment, the organism referred in the definition of "eatable" is an animal that can be fed by a person that takes care of it. In a particular embodiment, is a pet animal, wherein "pet" refers to the term well-known by an expert in the field. The pet is preferably selected from the list consisting of a cat, a dog, a bird, a rabbit, a guinea pig, a fish, a reptile and a ferret. In another particular embodiment, organism is an animal grown in a farm, wherein "animal grown in a farm" refers to the expression well-known by an expert in the field. In a preferred embodiment, the animal grown in a farm is selected from the list consisting of a cow, goat, horse, donkey, pig, poultry, rabbit, sheep, deer, lama, alpaca, barn owl, and combinations thereof.

In a preferred embodiment, the organism referred in the definition of "eatable" refers to a human, wherein said human is of any sex and age, i.e. a woman, a man or a child.

The GI tract as used herein, is obtained from an organism the meat of which is eatable. In a preferred embodiment, the GI tract as used herein is obtained, or isolated from an animal selected from the list consisting of cow, cow, goat, horse, donkey, pig, poultry, rabbit, sheep, deer, lama, alpaca, and combinations thereof. In a particular embodiment, the layers forming the casing of the invention derive from GI tract sections isolated from a combination of the animals referred above. In a particular embodiment, part of the layers derives from GI tract sections isolated from a cow, and others from a pig. In another particular embodiment, part of the layers derives from GI tract sections isolated from a cow, others from a pig, others from a sheep, and combinations thereof.

In a particular embodiment, all the definition and embodiments of the second, third, fourth, fifth and sixth aspects of the invention, apply to the first aspect of the invention.

### II- Method of the invention

In a second aspect, the invention relates to a method for obtaining the casing according to the first aspect of the invention that comprises the following steps:
(i) detaching from at least one GI tract section, part or all of at least one tissue of interest, and
(ii) depositing around the surface of a mold in a sequential manner, several layers derived from GI tract sections, wherein at least one of said layers derives from a GI tract section treated with step (i).

In a particular embodiment, all the layers treated with step (ii) of the method of the invention are layers obtained from step (i) of the method of the invention.

In a particular embodiment, the tissue of interest, or the animal tissue of interest, used herein is the tissue of interest as defined in any of the embodiments of the first aspect of the invention. Thus, in an embodiment, the tissue of interest, or the animal tissue of interest, the at least one tissue of interest comprises a tissue selected from the list consisting of the mesentery, the mesenteric adipose tissue, the muscularis propia, the epithelium from the mucosa, the lamina propia from the mucosa, the muscularis mucosae and combinations thereof.

The terms "GI tract", "GIT tract section", "layer" have been defined in the first aspect of the invention.

The expression "detaching from at least one GI tract section", as used herein, refers to the action of removing a specific tissue layer from the wall, or from a region of the wall of at least one GI tract section. The terms "GI tract section" and "wall of the GI tract", have been defined in the first aspect of the invention and apply to the second aspect of the invention. The action of detaching the tissue of interest, or part of it, can be done by means of a mechanical action. As well understood by a skilled person, removing the tissue or tissues of interest by means of a mechanical action, is herein referred to as mechanically detaching, or mechanically removing said tissue or tissues. Non-limiting examples of processes to mechanically detach the tissue of interest include tearing the tissue, or pushing it out. Methods to tear out or push out the tissue of interest are well-known by an expert in the field. In a particular embodiment, tearing the tissue comprises grabbing a small part of the tissue to be teared, preferably a protuberant element of it, and then pulling against it. In a particular embodiment, grabbing is performed manually, by means of a gripper, o directly with the fingers of a person tearing the tissue. Then, the person grabbing the tissue pulls the tissue against it. In another particular embodiment, said process of grabbing and pulling the tissue of interest is performed by means of a machine. In another embodiment, mechanically detaching the tissue of interest by pushing it out is performed by means of a tool that can cut a tissue when a gentle pressure is applied to said tissue in a direction parallel to the surface of the tissue to be detached. Non-limiting examples of said tool include a scalpel, a knife, a rubber, a scratcher or a meat scraper, or a scraper machine.

In a preferred embodiment, step (i) of the method of the invention comprises mechanically removing or removing the at least one tissue of interest. In a particular embodiment, mechanically detaching the tissue of interest is performed manually as defined above. In a preferred embodiment, it is performed directly with the fingers of a person that grabs a protuberant element of said at least one tissue of interest tissue. In another embodiment, it is performed with a gripper. In a particular embodiment, a protuberant element of the tissue is an irregularity of the tissue that excels from the surface of the tissue. In a preferred embodiment, the protuberance is the end of the at least one tissue in the GI tract section treated with step (i) of the method. In another embodiment, mechanically detaching the at least one tissue of interest from at least on e GI tract section is performed with a machine. In another embodiment, the mechanically detaching the tissue of interest is performed by pushing it out. In a preferred embodiment, pushing out the tissue of interest from the GI tract wall section is preformed with a tool selected from the list consisting of a meat scrapper, scalpel, knife, rubber, or scratcher and combinations thereof.

The expression "part or all of the tissue of interest", as used herein in the context of step (i) of the method, refers to the fact that a percentage in w/w of at least 100%, 95%, 90%, 85%, 80%, 75%, 70%, 65%, 60%, 55%, 50%, 45%, 40%, 35%, 30%, 25%, 20%, 15%, 10%, 5%, of the weight of the at least one tissue of interest is detached from the GI tract section, with respect to the weight of the GI tract section. In a preferred embodiment, at least 80% in w/w of the at least one tissue of interest is detached. The at least one tissue of interest is as defined in any of the embodiments above. Methods to determine the % in w/w of at least one tissue of interest detached from the GI tract section are well known by an expert in the field, and include weighting the GI tract section before and after detaching the at least on tissue of interest. The difference between both weights expressed in % with respect to the weight of the GI before detaching said tissue(s) of interest corresponds to the % in w/w of at least one tissue of interest detached from the GI tract section. In an embodiment, the amount of tissue of interest eliminated is determined as the percentage of surface of tissue eliminated from the surface of a casing or of a GI tract section or layer as defined herein. In this case, the "part or all of the tissue of interest" refers to the fact that a percentage of at least 100%, 95%, 90%, 85%, 80%, 75%, 70%, 65%, 60%, 55%, 50%, 45%, 40%, 35%, 30%, 25%, 20%, 15%, 10%, 5%, preferably at least 30% of the surface of the GI tract section from which the tissue of interest has been detached. Methods to determine the % of surface of a GI tract section from which the tissue of interest has been detached are well known by an expert in the field and include measuring the whole surface of the GI tract section and then the surface from which the tissue of interest has been detached, to calculate the percentage of the latter with respect to the whole surface of the GI tract section. In a particular embodiment, the layers obtained from step (i) of the method of the invention as defined in this aspect of the invention, are as any of the layers of the first aspect of the invention that comprise a % in volume of at least one tissue of interest with respect to the rest of tissues of the layer of less than 50%, 44%, 30%, 25%, 24%, 23%, 22%, 21%, 20%, 19%, 17%, 15%, 14%, 13%, 12%, 11%, 10% 9%, 8%, 7%, 6%, 5%, 4.5%, 4%, 3.5%, 3%, 2.5%, 2%, 1.5%, 1%, 0.9%, 0.8%, 0.7%, 0.6%, 0.5%, 0.4%, 0.3%, 0.2%, 0.1%, 0% preferably less than 10%.

In another embodiment, the layers obtained from step (i) of the method of the invention as defined in this aspect of the invention, are as any of the layers of the first aspect of the invention that comprise a % in surface of at least one tissue of interest with respect to the rest of tissues of the layer of less than 50%, 44%, 30%, 25%, 24%, 23%, 22%, 21%, 20%, 19%, 17%, 15%, 14%, 13%, 12%, 11%, 10% 9%, 8%, 7%, 6%, 5%, 4.5%, 4%, 3.5%, 3%, 2.5%, 2%, 1.5%, 1%, 0.9%, 0.8%, 0.7%, 0.6%, 0.5%, 0.4%, 0.3%, 0.2%, 0.1%, 0% preferably less than 10%. Methods to determine the % in volume or surface of the at least one tissue of interest with respect to the volume or surface of the rest of tissues of the layer have been defined in the first aspect of the invention.

In addition, the at least one tissue layer referred in the previous paragraph comprises mesenteric tissue. In another embodiment, the at least one animal tissue of interest referred in the previous paragraph comprises mesenteric adipose tissue. In another particular embodiment, the at least one animal tissue of interest referred in the previous paragraph comprises the muscularis propia. In another embodiment, the at least one animal tissue of interest referred in the previous paragraph comprises epithelium from the mucosa. In another embodiment, the at least one animal tissue of interest referred in the previous paragraph comprises epithelium from the mucosa and lamina propia, wherein the lamina propia preferably refers to the connective tissue of the lamina propia. In another embodiment, the at least one animal tissue of interest referred in the previous paragraph comprises epithelium from the mucosa, lamina propia and muscularis mucosae. In a particular embodiment, the at least one animal tissue of interest referred in the previous paragraph comprises mesenteric tissue, preferably mesenteric adipose tissue, and epithelium from the mucosa. In a particular embodiment, the at least one animal tissue of interest referred in the previous paragraph comprises mesenteric tissue, preferably mesenteric adipose tissue, epithelium from the mucosa and lamina propia from the mucosa, wherein lamina propia from the mucosa preferably refers to the connective tissue of the lamina propia. In a particular embodiment, the at least one animal tissue of interest referred in the previous paragraph comprises mesenteric tissue, preferably mesenteric adipose tissue, epithelium from the mucosa, lamina propia from the mucosa, and muscularis mucosae. In a particular embodiment, the at least one animal tissue of interest referred in the previous paragraph comprises mesenteric tissue, preferably mesenteric adipose tissue, muscularis propia, and epithelium from the mucosa. In a particular embodiment, the at least one animal tissue of interest referred in the previous paragraph comprises mesenteric tissue, preferably mesenteric adipose tissue, muscularis propia, epithelium from the mucosa and lamina propia from the mucosa, wherein lamina propia from the mucosa preferably refers to the connective tissue of the lamina propia. In a preferred embodiment, the at least one animal tissue of interest referred in the previous paragraph comprises mesenteric tissue, preferably mesenteric adipose tissue, muscularis propia, epithelium from the mucosa, lamina propia from the mucosa, and muscularis mucosae.

In an embodiment, the at least one tissue of interest that is detached in step (i) of the method of the invention is comprised in the mucosa of the GI tract, i.e. comprises at least the epithelium of the mucosa. Thus, in a particular embodiment, step (i) of the method of the invention is performed on the mucosa, of the GI tract section/s and the at least one tissue of interest comprises the epithelium of the mucosa. In another embodiment, step (i) of the method of the invention is performed on the mucosa of the GI tract section/s and the at least one tissue of interest comprises the epithelium of the mucosa, the lamina propia of the mucosa, preferably the connective tissue of the lamina propia, the muscularis mucosae or combinations thereof.

In another embodiment, the GI tract section comprises mesentery attached to the exterior face of the GI tract. In this case, the at least one tissue of interest that is detached in step (i) of the method of the invention is comprised in the exterior face of the GI tract, i.e. in the serosa or the adventitia and comprises mesenteric tissue or mesenteric adipose tissue. Thus, in a preferred embodiment, the GI tract section/s of step (i) of the method of the invention comprises mesenteric tissue attached to the serosa or adventitia, step (i) is performed on said serosa or adventitia and the at least one tissue of interest comprises mesenteric tissue, preferably mesenteric adipose tissue.

In another embodiment, when the GI tract section comprises mesentery attached to the exterior face of the GI tract, the at least one tissue of interest detached in step (i) of the method comprises mesenteric tissue, preferably mesenteric adipose tissue, and also a tissue comprised in the mucosa. Therefore, in a particular embodiment, the GI tract section/s of step (i) of the method of the invention comprise/s mesenteric tissue attached to the serosa or adventitia, and step (i) is performed on said serosa or adventitia and also on the mucosa, and the at least one tissue of interest comprises mesenteric tissue, preferably mesenteric adipose tissue, and the epithelium of the mucosa. In another embodiment, the at least one tissue of interest referred in the previous embodiment comprises mesenteric tissue, preferably mesenteric adipose tissue, the epithelium of the mucosa, the lamina propia of the mucosa, preferably the connective tissue of the lamina propia, the muscularis mucosae or combinations thereof.

In a preferred embodiment, the GI tract sections that comprise mesentery attached to its exterior face referred in the previous paragraph are isolated from a part of the large intestine.

As well understood by a skilled person, since the mucosa is in the interior face of the GI tract of an organism, the GI tract section used in the method of the invention has to be turned inside out before performing the removal of the at least one tissue of interest on the mucosa. In addition, it can be turned outside in after said removal. In addition, in some case the GI tract sections used have been previously turned inside out, for instance in the slaughter, and thus, to detach tissue attached to the serosa or adventitia, said GI tract sections needs to be turned inside out again. Thus, in a particular embodiment, step (i) of the method of the invention comprises a step (i') before performing the removal of the tissue of interest, which comprises turning inside out the GI tract section/s.. In another embodiment, step (i) of the method of the invention comprises a step (i') before performing the removal of the tissue of interest, wherein said tissue of interest comprises at least one tissue from the mucosa, which comprises turning inside out the GI tract section/s. In another embodiment, step (i) of the method of the invention comprises a step (i') before performing the removal of the tissue of interest, wherein said tissue of interest comprises at least one mesenteric tissue, preferably mesenteric adipose tissue, which comprises turning inside out the GI tract section/s. In another embodiment, step (i) of the method of the invention comprises a step (i') before performing the removal of the tissue of interest, wherein said tissue of interest comprises at least one muscularis propia, which comprises turning inside out the GI tract section/s. In another embodiment, the GI tract section turned inside out at step (i') of the method of the invention is turned outside in at step (i") of the method of the invention, after the removal of the at least one tissue of interest.

The expression "turning inside out", as used herein in connection with the GI tract section of the invention, refers to the process of putting the internal tissue layer of the GI tract in the exterior side of the GI tract section, and vice versa. As understood by a skilled person, the GI tract section can be provided already turned inside out from the slaughter. Therefore, in some cases the internal tissue layer of the GI tract of the invention is the mucosa or submucosa, and in others, it is the serosa or the adventitia. Thus, in a particular embodiment, the GI tract section is turned inside out to be able to detach the tissue of interest from the serosa or adventitia, wherein said tissue of interest is preferably mesenteric tissue, more preferably, mesenteric adipose tissue, or even to tdetach the muscularis propia. In another embodiment, the GI tract is turned inside out to be able to detach the at least one tissue layer from the mucosa or submucosa, wherein said tissue layer is preferably the epithelium of the mucosa, the lamina propia of the mucosa, preferably the connective tissue of the lamina propia, the muscularis mucosae or combinations thereof. Therefore, once the GI tract section of the invention has been turned inside out, i.e. in the "turned inside out GI tract section of the invention", or in the "turned GI tract section of the invention", the external tissue layer of the GI tract section is the serosa or adventitia, the muscularis propia, or the mucosa or submucosa. In an embodiment, the external tissue layer of the turned GI tract section of the invention is the serosa. In a preferred embodiment, the external tissue layer of the turned GI tract section of the invention is the adventitia. In an embodiment, the external tissue layer of the turned GI tract section of the invention is the muscularis propia. In an embodiment, the internal tissue layer of the turned GI tract section of the invention is the mucosa. In another embodiment, the internal tissue layer of the turned GI tract section of the invention is the submucosa. In an embodiment, the external tissue layer of the turned GI tract section of the invention is the submucosa. In a preferred embodiment, the external tissue layer of the turned GI tract section of the invention is the mucosa. In an embodiment, the internal tissue layer of the turned GI tract section of the invention is the serosa. In another embodiment, the internal tissue layer of the turned GI tract section of the invention is the adventitia. In another embodiment, the internal tissue layer of the turned GI tract section of the invention is the muscularis propia.

In a preferred embodiment, the GI tract section that has been turned inside out preserves the shape of the GI tract section of the invention before it has been turned inside out. Thus, when the GI tract section of the method of the invention has a tubular shape as defined above, once turned inside out, said turned GI tract section also has a tubular shape. In another preferred embodiment, turning inside out the GI tract section of the invention, does not cause cuts on the GI tract section.

Methods to turn inside out a material such as the GI tract section of the invention are well known by an expert in the field. Non-limiting examples of such methods include grabbing an end of the GI tract section, at for instance two points, and pulling it back until the whole GI tract section is turned inside out as defined above. Grabbing can be performed by any means, such as for instance with gripper, or simply with the fingers of a person. Pulling it back can be performed manually. The method can also be done with the help of a machine, such as with a casing filler, wherein the diameter of the filler is adapted to that of the GI tract section being treated.

The expression "turning outside in", as used herein, refers to the process of turning inside out the GI tract section of the invention. In some cases, turning outside in the GI tract of the invention is performed after it has been treated to eliminate the components comprised within the GI tract when it was inside the organism from which it is isolated, and preferably, any additional undesired rest materials, as defined in the definition of layer in the first aspect of the invention. Therefore, the step of turning outside in is preferably performed to the GI tract section of the invention once it has all the characteristics of the layer of the invention, as defined therein. Thus, in an embodiment, the layer of the invention is turned outside in. Therefore the resulting layer of the invention, i.e. the turned outside in layer of the invention, has as exterior tissue layer the serosa, the adventitia, or the muscularis propia, preferably the serosa. The turned outside in layer of the invention, has as internal layer the mucosa, the epithelium from the mucosa, the lamina propia from the mucosa, the muscularis mucosae, the submucosa or the muscularis propia, preferably the lamina propia. In another embodiment, the turned outside in layer of the invention, has as internal layer the muscularis mucosae. In another embodiment, the turned outside in layer of the invention, has as exterior tissue layer the mucosa, the epithelium from the mucosa, the lamina propia from the mucosa, the muscularis mucosae, the submucosa or the muscularis propia, preferably the lamina propia, wherein said exterior tissue layer has been preferably treated to detach the tissue of interest. The turned outside in layer of the invention, has as internal layer the serosa or the adventitia, wherein said internal tissue layer has been treated to detach the tissue of interest.

Methods to turn outside in the GI tract section of the invention, or the layer of the invention are well-known by an expert in the field and are the same as the used to turn the GI tract inside out and mentioned above.

In order to facilitate manipulation of the GI tract sections treated with the method of the invention, they are soaked in warm water before step (i), step (i'), and/or step (ii).

Thus, in a particular embodiment, the method of the invention comprises soaking the GI tract section in warm water before performing the removal of the at least one tissue of interest on the serosa, adventitia, muscularis propia or the mucosa, and/or before turning inside out the GI tract section in step (i'), and/or before depositing the layers on the mold in step (ii).

In a particular embodiment, the water referred above is pool water, distilled water, drinking water, preferably drinking water. In another particular embodiment, the warm water referred above is water at a temperature between 15°C-55°C, 20°C-50°C, 25°C-45°C, 30°C-40°C, 35°C-42°C, 35°C-40°C, 37-40°C, preferably, 35°C-40°C. In an embodiment, the layers soaked in warm water as defined above are soaked for about 5 min-1 h, 10 min-45 min, 10 min-30 min, 15 min-20 min, preferably 15 min-20 min.

In a preferred embodiment, step (i) of the method of the invention comprises soaking the GI tract section in water at a temperature of between 35°C and 40°C for about 15min-20min before performing the removal of the at least one tissue of interest on the serosa, adventitia, muscularis propia or mucosa, and/or before turning inside out the GI tract section in step (i'), and/or before depositing the layers in step (ii). The term "mold", as used herein, refers to a structure that has a shape that corresponds to that of the interior cavity of the casing as referred in the definition of casing above. As mentioned above, the layers preferably conserve the tubular shape of the GI tract from which they derive, which also preferably conserve the tubular shape of the organs that constitute them. Thus, the mold, preferably has a tubular shape with a diameter slightly higher to that of the GI section from which the innermost layer of the casing derives. The expression "slightly higher" is defined below.

The expression "deposited around the surface of a mold", as used herein refers to any action that allows the layer being deposited, to surround the surface of the mold. Preferably, once deposited on the surface of the mold, no air is present between the layer and the surface of the mold. Thus, in a preferred embodiment, the deposition of the layer on the surface of the mold is performed avoiding the presence of air between the layer and the surface of the mold. Thus, once deposited on the surface of the mold, no wrinkle or bubbles are present between the layer and the surface of the mold below. Methods to deposit a layer on the surface of the mold, preferably avoiding the presence of air between the layer and the surface of the mold, are well-known by an expert in the field. Non-limiting examples of said methods include stretching the layer, putting it on the surface of the mold, and pushing the layer all along its surface with the help of a pencil or a spatula to eliminate the air retained between the layer and the surface of the mold. In case the layer has a tubular shape, another method may consist in stretching the layer with the tubular shape, and introduce a tubular mold inside the tubular layer, wherein the mold preferably has a diameter that is slightly higher than that of the GI section from which the innermost layer of the casing derives. In an embodiment, once the tubular mold is inside the tubular layer, a pencil or a spatula is used to push the layer all along its surface to eliminate the air retained between the layer and the surface of the mold.

Once the first layer has been deposited on the surface of the mold, the rest of layers forming the casing are deposited on a sequential manner. Deposition of the rest of layers is performed as indicated above for the layer first deposited on the surface of the mold, but substituting the expression "surface of the mold", by "the surface, or part of the surface, of a layer" already deposited. The expression "on a sequential manner", as used herein, refers to the fact that once a layer is deposited, preferably eliminating the air between said layer and the surface of the mold or the layer below as defined above, another layer is directly deposited on top of it, or on a side of it, preferably on top of it. In a preferred embodiment, all the layers forming the casing of the invention, are deposited around the surface of a mold in a sequential manner, without air between the layers and/or the layers and the mold.

In a particular embodiment, the mold is characterized in that it is tubular and its diameter is equal or slightly higher to that of the GI from which the layer first deposited on the surface of the mold derives.

The expression "slightly higher", in the context of the diameter of the mold used in the invention, refers to a diameter that allows the layers forming the casing, in particular the innermost ones, to be stretched when placed in the mold, so that it does not show wrinkles when placed in the mold. Therefore, the mold has a diameter that is at least 5%, 7%, 10%, 11%, 12%, 13%, 14%, 15%, 16%, 17%, 18%, 19%, 20%, 21%, 22%, 23%, 24%, 25%, 27%; 30%, 32%, 35%, 37%, 40%, 42%, 45%, 47%, 50%, 55%, 60%, 65%, 70%, 75%, 80%, 85%, 90%, 95%, 100% bigger than the diameter of the innermost layer forming the casing. In an embodiment, the mold has a diameter that is at least 5%, 7%, 10%, 11%, 12%, 13%, 14%, 15%, 16%, 17%, 18%, 19%, 20%, 21%, 22%, 23%, 24%, 25%, 27%; 30%, 32%, 35%, 37%, 40%, 42%, 45%, 47%, 50%, 55%, 60%, 65%, 70%, 75%, 80%, 85%, 90%, 95%, 100% bigger than the diameter of the 2 innermost layers forming the casing. In an embodiment, the mold has a diameter that is at least 5%, 7%, 10%, 11%, 12%, 13%, 14%, 15%, 16%, 17%, 18%, 19%, 20%, 21%, 22%, 23%, 24%, 25%, 27%; 30%, 32%, 35%, 37%, 40%, 42%, 45%, 47%, 50%, 55%, 60%, 65%, 70%, 75%, 80%, 85%, 90%, 95%, 100% bigger than the diameter of the 3 innermost layers forming the casing. In an embodiment, the mold has a diameter that is at least 5%, 7%, 10%, 11%, 12%, 13%, 14%, 15%, 16%, 17%, 18%, 19%, 20%, 21%, 22%, 23%, 24%, 25%, 27%; 30%, 32%, 35%, 37%, 40%, 42%, 45%, 47%, 50%, 55%, 60%, 65%, 70%, 75%, 80%, 85%, 90%, 95%, 100% bigger than the diameter of the 4 innermost layers forming the casing. In an embodiment, the mold has a diameter that is at least 5%, 7%, 10%, 11%, 12%, 13%, 14%, 15%, 16%, 17%, 18%, 19%, 20%, 21%, 22%, 23%, 24%, 25%, 27%; 30%, 32%, 35%, 37%, 40%, 42%, 45%, 47%, 50%, 55%, 60%, 65%, 70%, 75%, 80%, 85%, 90%, 95%, 100% bigger than the diameter of the 5 innermost layers forming the casing. In an embodiment, the mold has a diameter that is at least 5%, 7%, 10%, 11%, 12%, 13%, 14%, 15%, 16%, 17%, 18%, 19%, 20%, 21%, 22%, 23%, 24%, 25%, 27%; 30%, 32%, 35%, 37%, 40%, 42%, 45%, 47%, 50%, 55%, 60%, 65%, 70%, 75%, 80%, 85%, 90%, 95%, 100% bigger than the diameter of the 7 innermost layers forming the casing. In an embodiment, the mold has a diameter that is at least 5%, 7%, 10%, 11%, 12%, 13%, 14%, 15%, 16%, 17%, 18%, 19%, 20%, 21%, 22%, 23%, 24%, 25%, 27%; 30%, 32%, 35%, 37%, 40%, 42%, 45%, 47%, 50%, 55%, 60%, 65%, 70%, 75%, 80%, 85%, 90%, 95%, 100% bigger than the diameter of the 10 innermost layers forming the casing. In an embodiment, the mold has a diameter that is at least 5%, 7%, 10%, 11%, 12%, 13%, 14%, 15%, 16%, 17%, 18%, 19%, 20%, 21%, 22%, 23%, 24%, 25%, 27%; 30%, 32%, 35%, 37%, 40%, 42%, 45%, 47%, 50%, 55%, 60%, 65%, 70%, 75%, 80%, 85%, 90%, 95%, 100% bigger than the diameter of all the layers forming the casing.

In a particular embodiment, the innermost layer of the casing does not have a regular diameter. In this case, the diameter of the mold is not the same all along the length of the mold and is any of the percentages indicated above higher than that of the innermost layer of the casing all along its length. In another particular embodiment, the 2, 3, 4, 5, 7, 10 innermost layers of the casing do not have a regular diameter. Thus, in an embodiment, the diameter of the mold is not the same all along the length of the mold and is at least 5%, 7%, 10%, 11%, 12%, 13%, 14%, 15%, 16%, 17%, 18%, 19%, 20%, 21%, 22%, 23%, 24%, 25%, 27%; 30%, 32%, 35%, 37%, 40%, 42%, 45%, 47%, 50%, 55%, 60%, 65%, 70%, 75%, 80%, 85%, 90%, 95%, 100% bigger than the diameter of the 2 innermost layers of the casing all along their length. In another embodiment, the diameter of the mold is not the same all along the length of the mold and is at least 5%, 7%, 10%, 11%, 12%, 13%, 14%, 15%, 16%, 17%, 18%, 19%, 20%, 21%, 22%, 23%, 24%, 25%, 27%; 30%, 32%, 35%, 37%, 40%, 42%, 45%, 47%, 50%, 55%, 60%, 65%, 70%, 75%, 80%, 85%, 90%, 95%, 100% bigger than the diameter of the 3 innermost layers of the casing all along their length. In another embodiment, the diameter of the mold is not the same all along the length of the mold and is at least 5%, 7%, 10%, 11 %, 12%, 13%, 14%, 15%, 16%, 17%, 18%, 19%, 20%, 21%, 22%, 23%, 24%, 25%, 27%; 30%, 32%, 35%, 37%, 40%, 42%, 45%, 47%, 50%, 55%, 60%, 65%, 70%, 75%, 80%, 85%, 90%, 95%, 100% bigger than the diameter of the 4 innermost layers of the casing all along their length. In another embodiment, the diameter of the mold is not the same all along the length of the mold and is at least 5%, 7%, 10%, 11%, 12%, 13%, 14%, 15%, 16%, 17%, 18%, 19%, 20%, 21%, 22%, 23%, 24%, 25%, 27%; 30%, 32%, 35%, 37%, 40%, 42%, 45%, 47%, 50%, 55%, 60%, 65%, 70%, 75%, 80%, 85%, 90%, 95%, 100% bigger than the diameter of the 5 innermost layers of the casing all along their length. In another embodiment, the diameter of the mold is not the same all along the length of the mold and is at least 5%, 7%, 10%, 11%, 12%, 13%, 14%, 15%, 16%, 17%, 18%, 19%, 20%, 21%, 22%, 23%, 24%, 25%, 27%; 30%, 32%, 35%, 37%, 40%, 42%, 45%, 47%, 50%, 55%, 60%, 65%, 70%, 75%, 80%, 85%, 90%, 95%, 100% bigger than the diameter of the 7 innermost layers of the casing all along their length. In another embodiment, the diameter of the mold is not the same all along the length of the mold and is at least 5%, 7%, 10%, 11%, 12%, 13%, 14%, 15%, 16%, 17%, 18%, 19%, 20%, 21%, 22%, 23%, 24%, 25%, 27%; 30%, 32%, 35%, 37%, 40%, 42%, 45%, 47%, 50%, 55%, 60%, 65%, 70%, 75%, 80%, 85%, 90%, 95%, 100% bigger than the diameter of the 10 innermost layers of the casing all along their length.

In another embodiment, none of the layers forming the casing have a regular diameter. Thus, in another embodiment, the diameter of the mold is not the same all along the length of the mold and is at least 5%, 7%, 10%, 11%, 12%, 13%, 14%, 15%, 16%, 17%, 18%, 19%, 20%, 21%, 22%, 23%, 24%, 25%, 27%; 30%, 32%, 35%, 37%, 40%, 42%, 45%, 47%, 50%, 55%, 60%, 65%, 70%, 75%, 80%, 85%, 90%, 95%, 100% bigger than the diameter of all the layers forming the casing all along their length.

In a particular embodiment, the diameter of the GI tract section is of 15 mm, 20 mm, 25 mm, 30 mm, 35 mm, 40 mm 45 mm, 50 mm, 55 mm, 60 mm, 65 mm, 75 mm, 80 mm, 85 mm, 90 mm, 95 mm, 100 mm, 110 mm, 120 mm, 130 mm, 140 mm, 150 mm, 160 mm, 170 mm, 180 mm, 190 mm, 200 mm, preferably of 40mm. In an embodiment, the diameter of the GI tract section is of 60 mm. In another embodiment, the diameter of the GI tract section is of 75 mm. In another embodiment, the diameter of the GI tract section is of 15 mm-200 mm, 20-mm-150mm, 30-100mm, 40 mm-75 mm, preferably of 40 mm-75 mm. In a particular embodiment said diameter is constant all along the GI tract section. In another embodiment, the diameter is not constant all along the GI tract section.

In a particular embodiment, the diameter of the mold is of 15 mm, 20 mm, 25 mm, 30 mm, 35 mm, 40 mm 45 mm, 50 mm, 55 mm, 60 mm, 65 mm, 75 mm, 80 mm, 85 mm, 90 mm, 95 mm, 100 mm, 110 mm, 120 mm, 130 mm, 140 mm, 150 mm, 160 mm, 170 mm, 180 mm, 190 mm, 200 mm, preferably of 40 mm. In an embodiment, the diameter of the mold is of 60 mm. In another embodiment, the diameter of the mold is of 75 mm. In another embodiment, the diameter of the mold is of 15 mm-200 mm, 20-mm-150mm, 30-100mm, 40 mm-75 mm, preferably of 40 mm-75 mm. In a particular embodiment said diameter is constant all along the mold. In another embodiment, the diameter is not constant all along the mold.

The length of the mold can be of any size, including that of the GI tract section, or longer, so that layers can be deposited one next to the other to form a casing longer than that of the GI tract sections used, and corresponding to that of the mold indicated herein. In a particular embodiment, the length of the mold is of 10 cm, 15 cm, 20 cm, 25 cm, 30 cm, 35 cm, 40 cm, 45 cm, 50 cm, 60 cm, 70 cm, 80 cm, 90 cm, 100 cm, 110 cm, 120 cm, 130 cm, 140 cm, 150 cm, 160 cm, 170 cm, 180 cm, 190 cm, 200 cm, 210 cm, 220 cm, 230 cm, 240 cm, 250 cm, 270 cm, 3 m, 3.5 m, 4 m, 4.5 m, 5 m, 5.5 m, 6 m, 6.5 m, 7 m, 7.5 m, 8 m, 8.5 m, 9 m, 10 m, 11 m, 12 m, 13 m, 14 m, 15 m, 16 m, 18 m, 19 m, 20 m, 22 m, 25 m, 27 m, 30 m. In a preferred embodiment, the length of the casing is of 50cm. In some embodiments, the length of the mold is of 10m. In another embodiment, the length of the mold is of 30 m. In another embodiment, the length of the GI tract section is of between 15-200 cm, 20-150 cm, 30-100cm, preferably 30-100cm. The expression "innermost layer", and "outermost layer" have been defined in the first aspect of the invention, and apply to the second aspect of the invention.

In a particular embodiment, the layers used in the method of the invention, are layers referred in the first aspect of the invention and forming the casing of the invention. All the embodiments of the first aspect of the invention referring to the layers forming the casing of the invention apply to the layers used in the method of the second aspect of the invention.

In a preferred embodiment, the number of layers used in the method of the second aspect of the invention correspond to the number of layers forming the casing of the first aspect of the invention and provided in the embodiment and definitions of the first aspect of the invention.

In a particular embodiment, at least 1 2, 3, 4, 5, 6, 7, 8, 9, 10, preferably at least 1 of the layers used in step (ii) of the method of the invention derive from GI tract sections treated with step (i) of the method of the invention. Thus, they comprise the % in volume of at least one tissue of interest indicated above for the layers treated with step (i) of the method of the invention. In a particular embodiment, all the layers used in step (ii) of the method of the invention, derive from GI tract sections treated with step (i) of the method of the invention.

Thus, in a particular embodiment, the GI tract sections from which the layers used in the method of the invention, i.e. in step (i) and step (ii) of the method of the invention, are the same GI tract sections from which the layers forming the casing of the first aspect of the invention derive. Thus, in a preferred embodiment, the GI tract sections used in the method of the second aspect of the invention are isolated from a part of the large intestine, the small intestine, the stomach, parts thereof or combinations thereof. In a preferred embodiment, GI tract sections used in the method of the second aspect of the invention are isolated from a part of the large intestine, the small intestine and combinations thereof. The term "a part of" is as defined in the first aspect of the invention.

The expression "GI tract section isolated from" has been defined in the first aspect of the invention. All the embodiments of the first aspect addressed to said expression apply to the second aspect of the invention.

In a particular embodiment, the GI tract sections used in step (i) of the method of the invention, are isolated from the large intestine, the small intestine, the stomach, parts thereof or combinations thereof. In a preferred embodiment, the GI tract sections used in step (i) of the method of the invention are isolated from the large intestine.

In a particular embodiment, the GI tract sections used in step (ii) of the method of the invention, are isolated from the large intestine, the small intestine, the stomach, parts thereof or combinations thereof. In a preferred embodiment, the GI tract sections used in step (ii) of the method of the invention are isolated from the large intestine and/or the small intestine.

In a particular embodiment, at least 1 2, 3, 4, 5, 6, 7, 8, 9, 10, preferably all the layers used in step (ii) of the method of the invention that derive from a GI tract section isolated from a part of the large intestine derive from a GI tract section treated with step (i) of the method of the invention.

In another embodiment, at least 1 2, 3, 4, 5, 6, 7, 8, 9, 10, preferably all the layers used in step (ii) of the method of the invention that derive from a GI tract section isolated from the small intestine derive from a GI tract section treated with step (i) of the method of the invention.

In another embodiment, 1 2, 3, 4, 5, 6, 7, 8, 9, 10, preferably all the layers used in step (ii) of the method, derive from a GI tract section treated with step (i) of the method of the invention.

In a particular embodiment, the layers used in step (ii) of the method of the invention that do not derive from a GI tract section treated with step (i) of the method of the invention, have been treated to eliminate at least the components comprised within the GI tract when it was inside the organism from which it is isolated, including the undesired rests referred in the definition of "layer" in the first aspect of the invention In a particular embodiment, this treatment consists in soaking the GI tract sections in warm water and then in cold water, wherein the warm water, and the corresponding times of soaking are as indicated above.

In a particular embodiment, the layers first deposited around the surface of the mold in a sequential manner derive from a GI tract section isolated from the large intestine, the small intestine, the stomach or combinations thereof, preferably from the small intestine. Preferably, said first layers are the 1-10, 1-5, 1-4, 1-3, 1-2, preferably, 1-3 first layers deposited in a sequential manner on the surface of the mold. In a preferred embodiment, no layers derived from other organs of the GI tract are deposited in between said layer. In another embodiment, at least one layer derived from a part of another organ of the GI tract is deposited in between said layers, preferably from a part of the large intestine.

As well understood by a skilled person, the first layers deposited correspond to the innermost layers forming the casing of the invention defined in the first aspect of the invention. The embodiments addressed to said innermost layers of the first aspect apply to the layers first deposited in the method of the invention.

In a particular embodiment, the last layers deposited around the surface of the mold in a sequential manner derive from a GI tract section isolated from the large intestine, the small intestine, the stomach or combinations thereof, preferably from the large intestine.

Preferably, said last layers are the 1-10, 1-5, 1-4, 1-3, 1-2, preferably, 1-3 last layers deposited in a sequential manner on the surface of the mold. In a preferred embodiment, no layers derived from other organs of the GI tract are deposited in between said layer. In another embodiment, at least one layer derived from a part of another organ of the GI tract is deposited in between said layers, preferably from a part of the small intestine.

As well understood by a skilled person, the last layers deposited correspond to the outermost layers forming the casing of the invention, defined in the first aspect of the invention. The embodiments addressed to said outermost layers of the first aspect apply to the layers last deposited in the method of the invention.

In a particular embodiment, all the layers deposited on the mold in the method of the invention consist in the first layers deposited on the mold as defined above. In a particular embodiment, all the layers deposited on the mold in the method of the invention consist in the last layers deposited in the mold as defined above. In a preferred embodiment, all the layers deposited on the mold in the method of the invention consist in the first and the last layers deposited on the mold as defined above.

In another embodiment, the large intestine region from which the GI tract section is isolated in any of the embodiments herein consists of the cecum, the transverse colon, the descending colon, the sigmoid colon, the rectum, the anal channel, parts thereof or combinations thereof. In another embodiment, the small intestine region from which the GI tract section is isolated in any of the embodiments herein, consists of the duodenum, the jejunum, the Ileum, parts thereof or combinations thereof.

In another embodiment, the GI tract as used in any of the embodiment herein, is obtained from an organism the meat of which is eatable. In a preferred embodiment, the GI tract as used herein is obtained, or isolated from an animal selected from the list consisting of cow, goat, horse, donkey, pig, poultry, rabbit, sheep, deer, lama, alpaca, and combinations thereof. In a particular embodiment, the layers used in the method of the invention derive from GI tract sections isolated from a combination of the animals referred above. In a particular embodiment, part of the layers derive from GI tract sections isolated from a cow, and others from a pig. In another particular embodiment, part of the layers derive from GI tract sections isolated from a cow, others from a pig, others from a sheep, and combinations thereof.

### Additional steps of the method of the invention

In a particular embodiment, the method of the second aspect of the invention further comprises a step (iii) that comprises maintaining the casing obtained from the previous steps at a temperature between 25°C-70°C, preferably between 35°C-55°C, for at least 30 min, preferably at least 2 hours.

Therefore, in a particular embodiment, the method of the invention relates to a method for obtaining the casing according to the first aspect of the invention that comprises the following steps:
(i) detaching from at least one GI tract section, part or all of the at least one tissue of interest,
(ii) depositing around the surface of a mold in a sequential manner, several layers derived from GI tract sections, wherein at least one of said layers derives from a GI tract section treated with step (i), and
(iii) maintaining the casing obtained from the previous steps at a temperature between 25°C-70°C, preferably between 35°C-55°C, for at least 30 min, preferably at least 2 hours.

The percentage of water present in the casing obtained from step (iii) is of 5%-50%, 10%-40%, 12%-30%, 15%-25%, preferably 15%-25% in % w/w. As well understood by a skilled person, the times and temperatures referred in step (iii) of the method can vary depending on the number of layers and the thickness of the layers forming the casing, in order to reach the % of water of interest just indicated. Methods to determine the amount water present in the casing are well known by an expert in the field and include using a moisture analyzer, and/or applying the loss on drying (LOD) method that consists in weighing a sample before and after it is dried and thus determining the weight of the moisture originally present in the sample.

Thus, in another embodiment, the method of the invention relates to a method for obtaining the casing according to the first aspect of the invention that comprises the following steps:
(i) detaching from at least one GI tract section, part or all of the at least one tissue of interest, and
(ii) depositing around the surface of a mold in a sequential manner, several layers derived from GI wall sections, wherein at least one of said layers derives from a GI tract section treated with step (i), and
(iii) reducing the % in w/w of the casing obtained from step (ii) to 15%-25%.

As indicated above, in a particular embodiment, the method of the invention can comprise a step (i') before performing the removal of the tissue of interest, which comprises turning inside out the GI tract section/s. In another embodiment, the GI tract section turned inside out at step (i') of the method of the invention is turned outside in at step (i") of the method of the invention, after the removal of the at least one tissue of interest.

Therefore, in a particular embodiment, the method of the invention relates to a method for obtaining the casing according to the first aspect of the invention that comprises the following steps:
(i') turning inside out at least one GI tract section
(i) detaching from at least one GI tract section at least one tissue of interest, wherein at least one of said GI tract sections is obtained from step (i') (i") optionally turning outside in at least one GI section obtained from step (i), and
(ii) depositing around the surface of a mold in a sequential manner, several layers derived from GI wall sections, wherein at least one of said layers derives from a GI tract section treated with step (i), and optionally also with step (i").

In a particular embodiment, step (i") is performed in the GI tract sections treated with step (i'). In another particular embodiment, step (i") is performed in GI tract sections not treated with step (i)'. In another particular embodiment, step (i") is performed in all GI tract sections obtained from step (i).

In another particular embodiment, the second method of the invention relates to a method for obtaining the casing according to the first aspect of the invention that comprises the following steps:
(i') turning inside out at least one GI tract section
(i) detaching from at least one GI tract section at least one tissue of interest, wherein at least one of said GI tract sections is obtained from step (i') (i") optionally turning outside in at least one GI sections obtained from step (i), and
(ii) depositing around the surface of a mold in a sequential manner, several layers derived from GI wall sections, wherein at least one of said layers derives from a GI tract section treated with step (i), and optionally also with step (i"),
   and
(iii) maintaining the casing obtained from the previous steps at a temperature between 25°C-70°C, preferably between 35°C-55°C, for at least 30 min, preferably at least 2 hours.

In a particular embodiment, step (i") is performed in the GI tract sections treated with step (i'). In another particular embodiment, step (i") is performed in GI tract sections not treated with step (i)'. In another particular embodiment, step (i") is performed in all GI tract sections obtained from step (i).

As well understood by a skilled person, step (iii) of the method of the invention as defined in any of the embodiments above can be substituted by the following step (iii):
(iii) reducing the % in w/w of the casing obtained from step (ii) to 15%-25%.

As indicated above, the method of the invention may comprise a step of soaking the GI tract sections in warm water, before step (i), and/or before step (ii). As well understood by a skilled person, said additional step/s of treatment can be included in any of the methods described herein, before step (i), before step (i'), and/or before step (ii). In a particular embodiment, the embodiments provided above for said treatment in warm water also apply herein. In a particular embodiment, said additional steps of treatment in warm water can be referred to as (i*), (i**) and/or (i***), wherein (i*) would be the first treatment in warm water to take place, (i**) the second treatment in warm water to take place to take place, and (i***) the third treatment in warm water to take place to take place in the method of the invention.

In a particular embodiment, steps (i'), and preferably (i") as well, are performed on GI tract sections derived from the large intestine. In a particular embodiment, step (i') is performed on GI tract sections that comprise mesenteric tissue, preferably mesenteric adipose tissue attached to the serosa or adventitia. In another particular embodiment, step (i') is performed in GI tract sections from which tissue from the muscularis propia is detached in step (i) of the method of the invention. In another particular embodiment, step (i') is performed in GI tract sections from which tissue from the mucosa is detached in step (i) of the method. In a particular embodiment, all the GI tract sections treated with step (i') are treated in step (i). In another particular embodiment, the GI tract sections derived from the large intestine treated in step (i) are treated in step (i'). In another particular embodiment, the GI tract sections treated in step (i) wherein the tissue of interest comprises mesenteric tissue are treated in step (i'). In another particular embodiment, the GI tract sections treated in step (i) wherein the tissue of interest comprises tissue from the muscularis propia, are treated in step (i'). In another particular embodiment, the GI tract sections treated in step (i) wherein the tissue of interest comprises tissue from the mucosa and/or submucosa, are treated in step (i').

In a preferred embodiment, the embodiments referred herein in connection with the method of the invention apply to the additional steps of the method of the invention.

In a particular embodiment, the GI tract sections used in the methods of the invention, have been incubated in salt before carrying the method of the invention, for instance in the slaughter house. Therefore, in a particular embodiment, the GI tract sections used in the methods of the invention have been desalted before carrying the first steps of the methods of the invention defined above. Said process of desalting comprises washing them with high volumes of water. In a preferred embodiment, desalting is performed by placing the GI tract sections in 20 L of water and changing the water at least 3 times, preferably 4 times. The obtained GI tract sections thereof are completely desalted. In a particular embodiment, said water is as defined above for the step of soaking the GI tract sections in warm water, and is preferably drinking water.

In a particular embodiment, the methods of the invention are performed with GI tracts, or sections thereof, that have already been pre-cleaned, for instance at the slaughterhouse. In a particular embodiment, pre-cleaning comprises removing a large part of the mesentery and/or adipose tissue, and removing most undesired rests in contact with the mucosa, as well as, in some cases, a large part of the mucosa. A large part of the mesentery, as used herein, refers to removing the mesenteric tissue attached to the serosa or adventitia of the GI tract section in at least 50%, 60%, 70%, 75%, 80%, 85%, 90%, 95%, 07%, 99%, 99.5% of the surface of the GI tract section to which it is attached. A large part of the mesentery, as used herein, refers to removing the mucosa part of the GI tract section in at least 50%, 60%, 70%, 75%, 80%, 85%, 90%, 95%, 07%, 99%, 99.5% of the interior surface of the GI tract section where the mucosa is located. Methods to determine said percentages are well known by an expert in the field, and have been defined in the first aspect of the invention.

In a particular embodiment, when additional steps of the method of the invention disclosed in this section are included in the method of the invention, they are included in the chronological order in which they are indicated to take place in the embodiments herein, and all the steps of the method are renumbered, so that they are defined with increasing numbers, following the chronological order just mentioned. References to said steps are also correctly adapted in the method of the invention. In a particular embodiment, embodiments addressed to a specific step also apply to the corresponding step in the method of the invention wherein the steps have been renumbered.

In a particular embodiment, all the definition and embodiments of the first, third, fourth, fifth and sixth aspects of the invention, apply to the second aspect of the invention.

### III- Casing obtained by the method of the invention

In a third aspect, the invention relates to a casing obtained by the method according to the second aspect of the invention.

In a particular embodiment, the casing of the third aspect of the invention comprises the characteristics of the casing as defined in the first aspect of the invention.

In a particular embodiment, all the definition and embodiments of the first, second, fourth, fifth and sixth aspects of the invention, apply to the third aspect of the invention.

### IV- Sausage of the method of the invention

In a fourth aspect, the invention relates to the use of the casing according the first or the third aspect of the invention, for obtaining a sausage.

In a fifth aspect, the invention relates to a sausage comprising the casing according to the first or third aspect of the invention.

In a sixth aspect, the invention relates to a method for obtaining a sausage that comprises introducing in the casing according to the first or third aspect of the invention, an eatable dough.

The term "sausage", as used herein, refers to the term well-known by an expert in the field. In a particular embodiment, the term refers to eatable item, that has cylindrical length of an eatable dough, generally a minced pork or other meat encased in a skin, typically sold raw to be grilled or fried before eating. In the case of the sausage referred herein, the skin referred in the definition of the term "sausage" is the casing of the first or second aspects of the invention.

The term "eatable" has been defined in the first aspect of the invention. The expression "eatable dough", as used herein, refers to a dough, resulting from mincing an eatable material, preferably meat, vegetables or fruits, more preferably meat. Said meat is preferably obtained from any of the animal species referred in the aspects above, from which the Gi tract sections are obtained.

In a particular embodiment, all the definition and embodiments of the first, second and third aspects of the invention, apply to the fourth, fifth and sixth aspects of the invention.

In a particular embodiment, the term "comprises", "comprises essentially" and "consists of" used in the embodiments of all the aspects of the invention are interchangeable.

The invention is further defined in the following numbered clauses:
1. A casing that comprises at least 1 layer derived from a gastrointestinal (GI) tract section, wherein the % in volume of at least one animal tissue of interest with respect to the volume of all the tissues present in the casing is lower than 10%.
2. The casing according to clause 1, wherein the at least one tissue of interest comprises a tissue selected from the list consisting of the mesentery, the mesenteric adipose tissue, the muscularis propia, the epithelium from the mucosa, the lamina propia from the mucosa, the muscularis mucosae and combinations thereof.
3. The casing according to any of the previous clauses, wherein the GI tract section/s are/is isolated from a part of the large intestine, a part of the small intestine, a part of the stomach or combinations thereof.
4. The casing according to any of clauses 1-3, wherein at least one of the layers derives from a GI tract section isolated from a part of the large intestine and comprises less than 10% in volume of the at least one animal tissue of interest with respect to the volume of all the tissues present in said layer/s.
5. The casing according to any of clauses 1-4, wherein at least one of the layers derives from a GI tract section isolated from a part of the small intestine.
6. The casing according to clause 5, wherein the at least one layer comprises less than 10% in volume of the at least one animal tissue of interest with respect to the volume of all the tissues present in said layer/s.
7. The casing according to any of clauses 1-6, wherein from the innermost to the outermost layer of the casing, 1-3 consecutive layers derive from GI tract sections isolated from the small intestine.
8. The casing according to any of clauses 1-7, wherein from the outermost to the innermost layer of the casing, 1-3 consecutive layers derive from a GI tract section isolated from the large intestine.
9. The casing according to any of clauses 3-7, wherein the large intestine part from which the GI tract section is isolated consists of the cecum, the transverse colon, the descending colon, the sigmoid colon, the rectum, the anal channel, parts thereof or combinations thereof.
10. The casing according to clauses 3-8, wherein the small intestine part from which the GI tract section is isolated consists of the duodenum, the jejunum, the Ileum, parts thereof or combinations thereof.
11. The casing according to any of clauses 1-10 wherein the animal from which the GI sections are obtained is selected from the list consisting of goat, horse, donkey, pig, poultry, rabbit, sheep, deer, lama, alpaca, and combinations thereof.
12. A method for obtaining the casing according to any of clauses 1-11 that comprises the following steps:
   (i) detaching from at least one GI tract section, part or all of the at least one tissue of interest, and
   (ii) depositing around the surface of a mold in a sequential manner, several layers derived from GI tract sections, wherein at least one of said layers derives from a GI tract section treated with step (i).
13. The method according to clauses 12, wherein step (i) comprises mechanically removing the at least one tissue of interest.
14. The method according to any of clauses 12-13 wherein step (i) is performed on the mucosa of the GI tract section/s and the at least one tissue of interest comprises the epithelium of the mucosa.
15. The method according to any of clauses 12-14 wherein the GI tract section/s of step (i) comprises mesenteric tissue attached to the serosa or adventitia, step (i) is performed on the serosa or adventitia and the at least one tissue of interest comprises mesenteric tissue.
16. The method according to clause 15 wherein step (i) is also performed on the mucosa of the GI tract section/s and the at least one tissue of interest further comprises the epithelium of the mucosa.
17. The method according to any of clauses 15 or 16 wherein the GI tract section/s is/are isolated from the large intestine.
18. The method according to any of clauses 14- 17 wherein step (i) further comprises a step (i') before performing the removal of the tissue of interest, which comprises turning inside out the GI tract section/s.
19. The method according to clause 18 wherein the GI section/s turned inside out in step (i') is/are turned outside in, in a step (i") before step (ii).
20. The method according to any of clauses 12-19 wherein step (i) comprises soaking the GI tract section in water at a temperature of between 35°C and 40°C for about 15min-20min before performing the removal of the at least one tissue of interest, and/or before turning inside out the GI tract section in step (i'), and/or before depositing the layers in step (ii).
21. The method according to any of clauses 12-20, wherein the GI tract sections referred in step (i) and/or step (ii) of the method are isolated from a part of the large intestine, the small intestine, the stomach or combinations thereof.
22. The method according to clause 21, wherein the layers used in step (ii) derived from a GI tract section isolated from a part of the large intestine, derive from a GI tract section treated with step (i) of the method.
23. The method according to clauses 21-22, wherein the layers used in step (ii) derived from a GI isolated from a part of the small intestine derive from a GI tract section treated with step (i) of the method.
24. The method according to any of clauses 21-23, wherein all the layers used in step (ii) of the method, derive from a GI tract section treated with step (i) of the method.
25. The method according to any of clauses 12-24, wherein the first 1-3 layers deposited on the surface of the mold in step (ii) of the method, derive from GI isolated from a part of the small intestine.
26. The method according to any of clauses 12-25, wherein the last 1-3 layers deposited on the surface of the mold in step (ii) of the method, derive from GI isolated from a part of the large intestine.
27. The method according to any of clauses 12-26, wherein the mold is characterized in that it is tubular and its diameter is equal or slightly higher to that of the GI from which the layer first deposited on the surface of the mold derives.
28. The method according to any of clauses 12-27, wherein the method further comprises a step (iii) that comprises maintaining the casing obtained from the previous steps at a temperature between 25°C-70°C, preferably between 35°C-55°C, for at least 30 min, preferably at least 2 hours.
29. The method according to any of clauses 12-28, wherein the large intestine region from which the GI tract section is isolated consists of the cecum, the transverse colon, the descending colon, the sigmoid colon, the rectum, the anal channel or combinations thereof.
30. The method according to any of clauses 12-29, wherein the small intestine region from which the GI tract section is isolated consists of the duodenum, the jejunum, the Ileum or combinations thereof.
31. The method according to any of clauses 12-30, wherein the animal from which the GI sections are obtained is selected from the list consisting of cow, goat, horse, donkey, pig, poultry, rabbit, sheep, deer, lama, alpaca, and combinations thereof
32. A casing obtained by the method according to any of clauses 12-31.
33. Use of the casing according to any of clauses 1-11 or 32 for obtaining a sausage.
34. A sausage comprising the casing according to any of clauses 1-11 or 32.
35. A method for obtaining a sausage that comprises introducing in the casing according to any of clauses 1-11 or 32, an eatable dough.

The following examples illustrate the invention and, in no way, limit the scope of the invention.

### EXAMPLE 1

### Description of the process to for obtaining the natural multi-intestinal casings

The production of the natural multi-intestinal casing is characterized by the steps described below:
- Desalting: The natural casing is desalted by introducing it into drinking water and by performing several water changes, until no traces of salt or brine are left.
- Hydration: This step allows softening the gut, which acquires the consistency needed to be able to remove superficial tissue of interest, such as fat tissue. The casing is immersed in hot water (35-40°C) for 15-20 minutes.
- Turning the casing: Using a casing machine, the casing can be turned in a simple way and as a result, the superficial tissue of interest, such as fat tissue, which is going to be removed, is positioned on the outer layer of the casing.
- Removal of the tissue of interest, such as fat tissue: with the help of a scraper or scraping machine the tissue of interest is removed. The tissue of interest is primarily the superficial layer of fat or fat tissue that the casings have, mainly guts belonging to the large intestine. Said tissue of interest can thus be mesenteric tissue, or mesenteric adipose tissue. In some cases, the tissue of interest that is removed is the mucosa, more specifically the epithelium from the mucosa, the lamina propia from the mucosa, or even parts of the muscular mucosae and/or of the muscularis propia.
- Putting in a mold: The different layers of gut are placed on a mold (these guts will come from both the small and large intestines and can be of different species).
- Drying process: Once the casing is placed on the mold, it is introduced in a dryer at specific drying conditions.
- End of the process: Once the drying process has finished, the multi-intestinal natural casing is unmolded and can follow the quality controls for its commercialization.

The productive, sensory and organoleptic advantages of the multi-intestinal natural casing thus obtained are mainly the following:
- Homogeneous calibre,
- Homogeneous currying,
- Homogeneous fat composition throughout the piece,
- Absence of characteristic unpleasant flavors and odors,
- It is not necessary to desalt it for its use, it is only necessary to hydrate it,
- Packaging convenient and easy to store and transport.

### EXAMPLE 2

### Resistance and elasticity values of the multi-intestinal natural casing.

Comparative table of two multi-intestinal natural casings made with different raw materials.
- M1:: Casing from pig (berra species) made with two layers of small intestine.
- M2:: Casing from pig (species of young pig) made with two layers of small intestine.

**Table 1**

| **Data Longitudinal** | **M1** | **M2** |
|---|---|---|
| Sample length (cm) | 10.00 | 10.00 |
| Caliber (mm) | 60 | 60 |
| Perimeter (cm) | 18.85 | 18.85 |

**Table 2**

| **Data transversal** | **M1** | **M2** |
|---|---|---|
| Sample length (cm) | 10.00 | 10.00 |
| Perimeter (cm) | 5 | 5 |

**Table 3**

| **DATA LONGITUDINAL** | **M1 Force (N)** | **M1 Stretching (mm)** | **M2 Force (N)** | **M2 Stretching (mm)** |
|---|---|---|---|---|
| 1 | 75.89 | 8.04 | 30.67 | 4.97 |
| 2 | 123.62 | 10.16 | 89.45 | 7.87 |
| 3 | 160.59 | 12.43 | 144.48 | 10.68 |
| 4 | 192.35 | 15.48 | 189.82 | 13.13 |
| 5 | 215.24 | 36.5 | 211.07 | 32.41 |

**Table 4**

| **RESULTS LONGITUDINAL** | **M1 Resistance (N/cm)** | **M1 Elasticity (%)** | **M2 Resistance (N/cm)** | **M2 Elasticity (%)** |
|---|---|---|---|---|
| 1 | 4.03 | 8.04% | 1.63 | 4.97% |
| 2 | 6.56 | 10.16% | 4.75 | 7.87% |
| 3 | 8.52 | 12.43% | 7.67 | 10.68% |
| 4 | 10.20 | 15.48% | 10.07 | 13.13% |
| 5 | 11.42 | 36.50% | 11.20 | 32.41% |

**Table 5**

| **DATA TRANSVERSAL** | **M1 Force (N)** | **M1 Stretching (mm)** | **M2 Force (N)** | **M2 Stretching (mm)** |
|---|---|---|---|---|
| 1 | 33.85 | 7.23 | 31.95 | 3.03 |
| 2 | 60.55 | 10.71 | 57.60 | 5.75 |
| 3 | 81.20 | 12.42 | 60.10 | 6.20 |
| 4 | 99.35 | 14.63 | 69.85 | 7.71 |
| 5 | 135.55 | 38.96 | 71.90 | 32.77 |

**Table 6**

| **RESULT TRANSVERSAL** | **M1 Resistance (N/cm)** | **M1 Elasticity (%)** | **M2 Resistance (N/cm)** | **M2 Elasticity (%)** |
|---|---|---|---|---|
| 1 | 6.77 | 7.23% | 6.39 | 3.03% |
| 2 | 12.11 | 10.71% | 11.52 | 5.75% |
| 3 | 16.24 | 12.42% | 12.02 | 6.20% |
| 4 | 19.87 | 14.63% | 13.97 | 7.71% |
| 5 | 27.11 | 38.96% | 14.38 | 32.77% |

The first column of tables 3-6 shows the successive times (1-5) at which a measure of the corresponding parameter is taken for the corresponding casing before the casing breaks down in response to the increasing forces applied, which are shown in the second and fourth column of tables 3 and 5. The terms "transversal" and "longitudinal" in tables 1-6 refer to the corresponding dimension of the casing. The parameter "Force" refers to the force applied at a specific time point to the corresponding casing (1-5). The parameter "stretching" refers to the length increase of the casing in the corresponding direction (longitudinal or transversal), in response to the force applied. The parameter "resistance" refers to the force applied divided by the casing perimeter. The parameter "elasticity" refers to the parameter "stretching" expressed in %, with respect to the length of the corresponding casing, in the corresponding direction (longitudinal or transversal).

### EXAMPLE 3

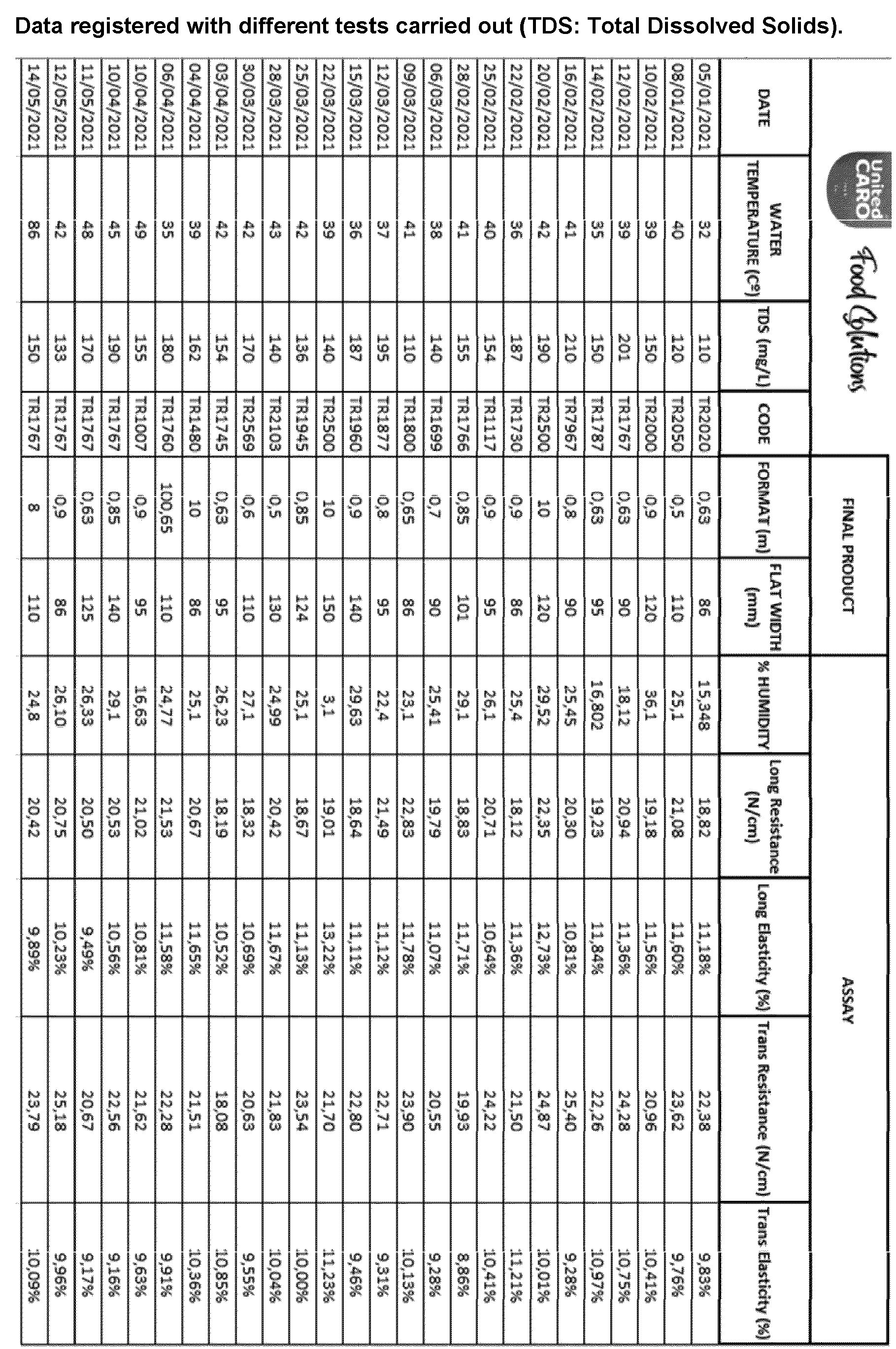

### EXAMPLE 4

### Example of a part of the production process with thick- and semi-thick-casing from pork.

| Product | Amount | Operation date: | Operation starting time: | Operation | | Operation finishing time |
|---|---|---|---|---|---|---|
| CP169.90 batch 2458 CU1 batch 16.39/453 | 30 metros | 16/5/21 | 15:00 | Desalination | | 15:15 |
| CP169.90 batch 2458 CU1 batch 16.39/453 | 30 metros | 16/5/21 | 15:15 | Cleaning | | 16:00 |
| CP169.90 batch 2458 CU1 batch 16.39/453 | 30 metros | 16/5/21 | 16:45 | | | 17:30 |
| Polyamida mold calibre 60 | 30 metros | 16/5/21 | 17:30 | | | 17:45 |
| Clean thick-casing in polyamide mold | 30 metros | 16/5/21 | 17:45 | | | 18:00 |
| Drying | | 16/5/21 | 18:00 | | | 20:00 |
| Casing disassembly | 30 metros | 17/5/21 | 20:00 | | | 20:30 |
| Vacuum packing | 30 metros | 17/5/21 | 20:30 | | | 21:00 |

### EXAMPLE 5

### Example of a project performed to compare curing of different multi-intestinal natural casing samples.

The order in which the layers are provided below corresponds to the order in which they are deposited in the mold, from the first one to the last one.
M1: Multi-intestinal casing with three layers (2 layers from pig's large intestine and 1 layer from pig's small intestine)
M2: Multi-intestinal casing with two layers (1 layer from pig's large intestine and 1 layer from pig's small intestine)
M3: Multi-intestinal casing with three layers (1 layer from pig's large intestine and 2 layers from pig's small intestine)
M4: Multi-intestinal casing with three layers (1 layer of pig's large intestine and 2 layers of pig's small intestine)

| | **M1** | **M2** | **M3** | **M4** |
|---|---|---|---|---|
| **Curing** | Long | Short | Normal | Normal |
| **Raw material** | TR2120 | TR2030 | TR2031 | TR2140 |
| **Stuffing date** | 27/4/2021 | 27/4/2021 | 27/4/2021 | 27/4/2021 |
| **Initial weight (g)** | 1.463 | 1.445 | 1.458 | 1.427 |
| **Packing date** | 15/07/2021 | 10/06/2021 | 28/06/2021 | 28/06/2021 |
| **Final weight (g)** | 889.20 | 779.45 | 791.80 | 772.70 |
| **% weight decrease** | 39.23% | 46.06% | 45.70% | 45.85% |

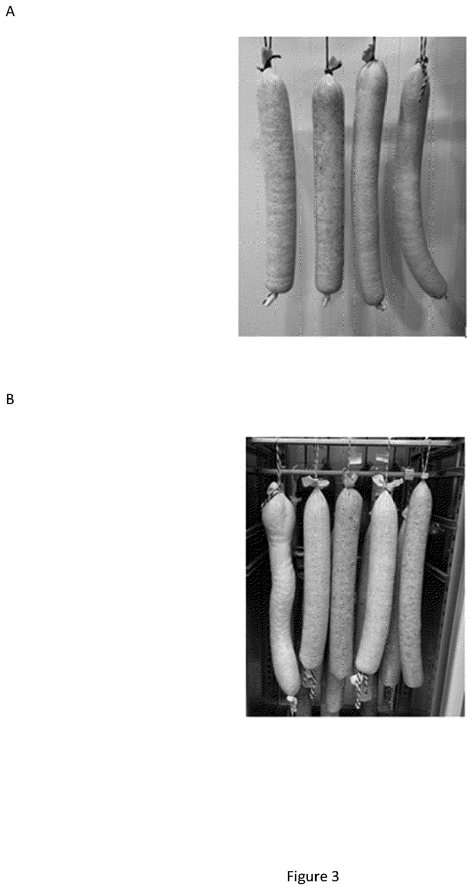

Samples M1-M4 are shown in Fig. 3-A before being treated with the curing process.

* The conditions of the dryer where the samples have been cured are 80% humidity and 8°C of temperature.

### EXAMPLE 6

### Example of a project performed to compare the currying of different multi-intestinal natural gut samples.

The order in which the layers are provided below corresponds to the order in which they are deposited in the mold, from the first to the last.
M1: Thick-casing (large intestine of pig).
M2: Multi-intestinal casing with three layers (1 layer from pig's large intestine and 2 layers of pig's small intestine)
M3: Multi-intestinal casing with two layers (1 layer from pig's small intestine and 1 layer from cattle's small intestine of cattle)
M4: Multi-intestinal casing with three layers (2 layer from pig's large intestine and 1 layer from pig's small intestine)
M5: Multi-intestinal casing with two layers (1 layer from cattle's small intestine and 1 layer from pig's small intestine of pig)

* The difference between samples 3 and 5 is the order in which the layers are placed on the mold.

* The conditions of the dryer where the samples have been cured are 80% humidity and 8°C of temperature.

Samples M1-M5 are shown in Fig. 3-B before being treated with the curing process.

| | **M1** | **M2** | **M3** | **M4** | **M5** |
|---|---|---|---|---|---|
| **Raw material** | CU31 | ESP010 | TR1981 | ESP004 | TR1422 |
| **Stuffing date** | 16/4/2021 | 16/4/2021 | 16/4/2021 | 16/04/2021 | 16/04/2021 |
| **Initial weight (Kg)** | 1,992 | 1.833 | 1,718 | 1.785 | 1.445 |
| **Packing date** | 8/06/2021 | 5/07/2021 | 1/06/2021 | 5/07/2021 | 25/05/2021 |
| **Final weight (Kg)** | 1,185 | 1.137 | 1,023 | 1.160 | 0.854 |
| **% weight decrease** | 40.51% | 37.97% | 41.10% | 34.99% | 41.15% |

## Claims

1. A casing that comprises at least 1 layer derived from a gastrointestinal (GI) tract section, wherein the % in volume of at least one animal tissue of interest with respect to the volume of all the tissues present in the casing is lower than 10%.

2. The casing according to claim 1, wherein the at least one tissue of interest comprises a tissue selected from the list consisting of the mesentery, the mesenteric adipose tissue, the muscularis propia, the epithelium from the mucosa, the lamina propia from the mucosa, the muscularis mucosae and combinations thereof.

3. The casing according to any of the previous claims, wherein the GI tract section/s are/is isolated from a part of the large intestine, a part of the small intestine, a part of the stomach or combinations thereof.

4. The casing according to any of claims 1-3, wherein at least one of the layers derives from a GI tract section isolated from a part of the large intestine and comprises less than 10% in volume of the at least one animal tissue of interest with respect to the volume of all the tissues present in said layer/s.

5. The casing according to any of claims 1-4, wherein at least one of the layers derives from a GI tract section isolated from a part of the small intestine.

6. The casing according to claim 5, wherein the at least one layer comprises less than 10% in volume of the at least one animal tissue of interest with respect to the volume of all the tissues present in said layer/s.

7. The casing according to any of claims 1-6 wherein the animal from which the GI sections are obtained is selected from the list consisting of goat, horse, donkey, pig, poultry, rabbit, sheep, deer, lama, alpaca, and combinations thereof.

8. A method for obtaining the casing according to any of claims 1-7 that comprises the following steps:
(i) detaching from at least one GI tract section, part or all of the at least one tissue of interest, and
(ii) depositing around the surface of a mold in a sequential manner, several layers derived from GI tract sections, wherein at least one of said layers derives from a GI tract section treated with step (i).

9. The method according to claim 8, wherein step (i) comprises mechanically removing the at least one tissue of interest.

10. The method according to any of claims 8-9 wherein step (i) is performed on the mucosa of the GI tract section/s and the at least one tissue of interest comprises the epithelium of the mucosa.

11. The method according to any of claims 8-10 wherein the GI tract section/s of step (i) comprises mesenteric tissue attached to the serosa or adventitia, step (i) is performed on the serosa or adventitia and the at least one tissue of interest comprises mesenteric tissue.

12. The method according to any of claims 8-11, wherein the GI tract sections referred in step (i) and/or step (ii) of the method are isolated from a part of the large intestine, the small intestine, the stomach or combinations thereof.

13. The method according to claim 12, wherein the layers used in step (ii) derived from a GI tract section isolated from a part of the large intestine, derive from a GI tract section treated with step (i) of the method.

14. The method according to any of claims 8-13, wherein the animal from which the GI sections are obtained is selected from the list consisting of cow, goat, horse, donkey, pig, poultry, rabbit, sheep, deer, lama, alpaca, and combinations thereof

15. A casing obtained by the method according to any of claims 8-14.

16. Use of the casing according to any of claims 1-7 or 15 for obtaining a sausage.

17. A sausage comprising the casing according to any of claims 1-7 or 15.

18. A method for obtaining a sausage that comprises introducing in the casing according to any of claims 1-7 or 15, an eatable dough.
